# EUROPÄISCHE PATENTSCHRIFT

(11) **EP 2 152 988 B1**
(45) Veröffentlichungstag und Bekanntmachung des Hinweises auf die Patenterteilung: **05.10.2016**
(21) Anmeldenummer: 08748936.5
(22) Anmeldetag: 16.04.2008
(51) Int. Cl.: E04F 10/10, E05D 15/26, E05B 65/00, E06B 3/48, E04F 13/08, E05D 13/00, F24J 2/04, E06B 9/06

(54) **FALTFASSADEN- ODER FALTMARKISENANORDNUNG**
FOLDING FAÇADE OR FOLDING AWNING ARRANGEMENT
AGENCEMENT DE FAÇADE PLIABLE OU DE STORE PLIABLE

(30) Priorität: 16.04.2007 DE 202007005558 U; 04.10.2007 DE 102007047626
(43) Veröffentlichungstag der Anmeldung: 17.02.2010
(73) Patentinhaber: Belu Verwaltungsgesellschaft mbH, 49811 Lingen (DE)
(72) Erfinder: LUCAS, Bernd, 49809 Lingen/Ems (DE)
(74) Vertreter: Grosse Schumacher Knauer von Hirschhausen
(86) Internationale Anmeldenummer: PCT/EP2008/003029
(87) Internationale Veröffentlichungsnummer: WO 2008/125343

(56) Entgegenhaltungen:
- DE-A1- 2 001 349
- DE-A1- 19 905 904
- US-A- 3 024 838
- US-B1- 6 547 292

## Beschreibung

Die Erfindung betrifft eine Faltfassaden- oder Faltmarkisenanordnung.

### TECHNOLOGISCHER HINTERGRUND

Gattungsgemäße Faltfassaden- oder Faltmarkisenanordnungen sind in Gestalt von Hangar-Toren, im Bereich von Geschäftsfronten, wie für Straßencafes oder als Licht- und/oder Wärmeschutzeinrichtungen vor Fenstern oder Türen bereits bekannt. Sie bestehen in den meisten Fällen aus nur zwei in sich starren Fassaden- oder Markisenelementen, die vor einer Gebäudeöffnung, wie einer Tür- oder Toröffnung oder vor einem Fenster angeordnet sind, um diese zu verschließen oder abzudecken und wieder freizulegen. Sie sind horizontal oder vertikal durch Zusammenfalten und Entfalten bewegbar. Bei vertikaler Bewegung ist das oberste Fassaden- oder Markisenelement, welches um eine horizontale Achse schwenkbar nahe seiner oberen Kante bezüglich des Gebäudes befestigt ist, an seiner Unterkante über eine ebenfalls horizontale Achse mit einem dar- unter gelegenen Fassaden- oder Markisenelement schwenkbar und quer zur Fassade ausknickbar verbunden. Die Unterkante des untersten Fassaden- oder Markisenelementes wird in Vertikalführungen gehalten und über Zugelemente beim Öffnen nach oben bewegt. Dadurch knickt das Verbindungsgelenk (Knick- oder Ausknickgelenk) zum oberen Fassaden- oder Markisenelement (in der Regel nach Außen) aus und bildet gemeinsam mit dem unteren Fassaden- oder Markisenelement bei völligem Öffnungszustand ein etwa dreiecksförmiges, im Wesentlichen horizontal vorstehendes Dach, dass als Wetter- oder Sonnenschutz dienen kann. Zum Schließen reicht es in der Regel aus, das zum Öffnen verwendete Zugelement zu entlasten und den unterstes Befestigungspunkt nach unten fahren zu lassen, wodurch die Fassaden- oder Markisenelemente aufgrund des Eigengewichtes sich selbsttätig senken. Bei geeigneter Anordnung der Scharniere bzw. der Gelenke und des Anbringungsortes des Zugelementes an der unteren Sektion sowie einer schwerpunktsmäßig geeigneten Wahl der Aufhängung der oberen Sektion ist die Faltfassaden- oder Markisenanordnung im völlig abgesenkten Zustand gerade gestreckt. Dadurch, dass im Knickbereich zwischen den Fassaden- oder Markisenelementen keine unmittelbare Führung vorhanden ist, kann für den Schließzustand eine Verriegelung als Stabilisierung z.B. gegen Winddruck, Windsog oder Vibrieren vorgesehen werden. Dies geschieht derzeit in der Regel nur bei relativ schweren Fassadenelementen, z.B. durch manuelle oder elektrische Verriegelungen.

Um die Faltfassaden- oder Faltmarkisenanordnung wieder öffnen zu können, muss sie aus der Strecklage des Schließzustandes in eine Knicklage überführt werden, bevor das Zugelement die weitere Öffnung bewirken kann. Ein Ausknicken zwischen den benachbarten Elementen im Knickbereich aus der gestreckten Totpunktlage heraus wird in der Regel durch im Knickbereich angeordnete Ausknickrollen erreicht, die das gespannte Zugelement im Schließzustand in einer nicht gestreckten, d.h. ausgeknickten Lage halten. Wird das Zugelement unter diesen Bedingungen unter Zugspannung gesetzt, drängt es in seine Strecklage zurück und drückt dabei horizontal gegen die Ausknickrollen und bewirkt ein erstes Ausknicken der benachbarten Fassaden- oder Markisenelement im Verbindungsgelenk aus der Strecklage heraus. Alternativ kann der Ausknickvorgang durch einen separaten, z.B. elektrisch betriebenen, Mechanismus bewirkt werden. Auf dem Markt bekannte, in den Befestigungsbereich des Zugelementes an der unteren Kante einer Faltfassadenanordnung integrierte Verriegelungshilfen haben sich als unzureichend zur Vermeidung von Vibrationen und Geräuschentwicklung erwiesen, und auch als wenig kraftvoll um ein Heranziehen beim Schließen oder Hinausdrücken beim Öffnen unterstützen zu können.

Aus der US-A-3 024 838 ist ein faltbares Hangartor bekannt, bei welchem zwischen einem der Fassadenelemente und dem von der Faltfassadenanordnung verschlossenen oder überdeckten Bereich ein längenunveränderbares schwenkbares Betätigungselement in Gestalt eines kombinierten Ausknick- und Verriegelungsmittels vorgesehen ist. Dieses ist einen Ends schwenkbar bezüglich des Gebäudes befestigt. An seinem gegenüberliegenden freien Endbereich ist das Ausknick- und Verriegelungsmittel entlang des dem Gebäude gegenüberliegenden Fassadenelementes unter Verschwenken verlagerbar. Als Antrieb zum Bewerkstelligen des Ausknickens aus der Strecklage der Faltfassadenanordnung dient eine an dem schwenkbaren, gewinkelten Ausknickhebel einen Ends angreifende Zugfeder, die einen Ends gebäudeseitig und anderen Ends an dem Ausknickhebel angreift und die im verriegelten Zustand unter Zugspannung steht und dann aktiv wird, wenn das Hebelende, an dem die Feder entgegen der Haltekraft eines Steuerseils angreift, von dem Steuerseil freigegeben wird. Das beim Ausknicken als Ausknickhebel dienende Betätigungsmittel dient auch als Verriegelungsmittel beim Verriegeln der Faltfassadenanordnung in dessen Strecklage. In dieser Lage wird das oben erwähnte Steuerseil gegen die Kraft der oben beschriebenen Feder angezogen, so dass der Verriegelungshebel einen Anschlag an einem der Fassadenelemente sichernd hintergreift. Um die Verriegelung zu lösen, wird das Steuerseil entlastet, so dass die Zugfeder den Verriegelungshebel in eine entriegelte Stellung zurück verlagern kann. Die Zugfeder und das Steuerseil sind permanent mit dem Ausknick- und Verriegelungshebel verbunden. Das Antriebsglied ist von dem Steuerseil unabhängig. Auch wird der Kraftantrieb für das Ausknicken einerseits sowie für das Entriegeln andererseits durch eine permanent mit dem Betätigungsmittel verbundene und an ihm angreifenden Zugfeder bewerkstelligt.

Aus der DE 199 05 904 A1 ist eine Faltfassadenanordnung bekannt, bei dem das über eine obere Seilscheiben geführte Zugseil zum Öffnen der Faltfassadenanordnung gegen die Gewichtskraft der Fassadenelemente aufgewickelt werden. Im Knickbereich der beiden Fassadenelemente sichert ein nach Art eines Keils wirkender Sicherungsriegel die Strecklage. An dem Zugseil befestigte Mitnehmer heben gegen die Kraft einer Zugfeder zum Öffnen der Anordnung zunächst die Sicherungshebel an. Sobald das Zugseil mit der Gewichtskraft der zu öffnenden Fassadenelemente belastet wird, verlagert sich das Zugseil innerhalb des Sicherungsriegels bis das Zugseil eine gestreckte Lage einnimmt, in der der Mitnehmer dann aus seiner anfänglichen Mitnahmeposition befreit wird und sich an dem Sicherungsriegel vorbei weiter nach oben bewegen kann. Der so frei gewordene Sicherungsriegel gleitet dann aufgrund seiner Gewichtskraft am Knickgelenk der bereits ausgeknickten Fassadenelemente ungehindert vorbei nach unten, bis er von einem weiteren Mitnehmer des Zugseiles, der oberhalb der Zugfeder angeordnet ist, samt dem unteren Fassadenelement wieder nach oben bewegt wird, um dann im oberen Bereich der Führungsschienen in einer Endposition einzurasten. Dort oben verbleibt der Mitnehmer auch beim Wiederschließen der Fassadenelemente durch Absenken, bis ein an dem oberen Fassadenelement vorgesehener Auslöser kurz vor Erreichen der Strecklage der Fassadenelemente den Mitnehmer von seiner Rastposition in der Führungsschiene wieder löst. Somit fallen die Sicherungsriegel als dann mit ihren schwertähnlichen Unterteilen in Verriegelungspositionen in Knickgelenkbereich zwischen den beiden Fassadenelementen, um diese zu verriegeln.

Schließlich ist aus der DE 2001349 A eine Faltladenanordnung bekannt, bei der ein zum Heben der Faltläden dienendes Stahlband bei Beginn einer Toröffnungsbewegung zwingend über die Rolle des längeren Endes eines Knickbügels entlang streichen muss und somit selber keinen angetriebenen Mitnehmer darstellt. Der als zweiarmiger Hebel ausgebildete Knickbügel muss im Sinne der ihm zugeordneten Ausknickfunktion weder schwenkbar noch längenveränderlich sein.

### DARSTELLUNG DER ERFINDUNG

Der Erfindung liegt die Aufgabe zugrunde, gattungsgemäße Fassaden- oder Markisenanordnungen, insbesondere hinsichtlich des Öffnens, Schließens und geschlossen Haltens, komfortabel auszustatten sowie einfach bedienbar zu machen. Andere Aspekte der Erfindung bestehen darin, die geschlossene Anordnung so zu verriegeln, dass sie weitgehend vibrationsfrei oder vibrationsarm wird und/oder ihr erstes Ausknicken/Anknicken zu verbessern und/oder das Hereinbewegen in eine Strecklage zu fördern.

Zur Lösung dieser Aufgabe wird eine Faltfassaden- oder Faltmarkisenanordnung mit den Merkmalen des Anspruchs 1 vorgeschlagen.

Mittels der Erfindung können sowohl vertikal als auch horizontal bewegbare Fassaden- oder Markisenelemente verriegelt werden, wobei in geschlossener Position eine vertikale, schräg geneigte oder horizontale Ebene von den Faltelementen aufgespannt werden kann.

Unter einer Faltfassadenanordnung wird im Sinne der Erfindung ein Abdeck- oder Verschlussanordnung zum Abdecken, Verschließen und/oder Freigeben einer Gebäudefläche oder -öffnung verstanden. Dabei kann es sich bei der Gebäudeöffnung um die Ein- und Ausfahrt in eine Garage, eine Zutrittsöffnung in ein Verkaufsgeschäft, ein Restaurant, eine Sportstätte und ähnliches handeln, wobei die Fassadenelemente der Faltfassadenanordnung die Aufgabe übernehmen, ein Tor oder eine Tür oder eine beliebige andere Fassadenfront zum Öffnen und Schließen einer Gebäudeöffnung zu bilden, unabhängig davon, ob sie sich optisch in die übrige Gebäudefassade in besonderer Weise einpasst oder wie eine Tür, ein Tor, ein Fenster oder ähnliches zur Geltung kommt. Ebenso kann eine Faltdach- oder Faltfassadenanordnung, als Dach für eine Terrassenfläche oder Ähnliches in horizontaler oder schräg geneigter Ausrichtung dienen, um von oben vor Witterungseinflüssen zu schützen und - im Öffnungszustand - die Fläche freizugeben. Die Anwendungen können auch in einem Gebäudeinneren erfolgen. Für diese Anwendung werden eher mehr als zwei Fassadenelemente miteinander faltbar verkettet verbunden, von denen zwei jeweils paarweise ausknicken und an den jeweils anderen Enden geführt werden. Die Ausknickstellen werden im Schließzustand verriegelt. Es können auch mehrere Mitnehmer mit Abstand voneinander bewegt werden, von denen jeder einem Fassadenelementpaar zugeordnet sein kann, so dass ein einziger Antrieb zu Bewegen einer mehrgliedrigen Faltfassaden- oder -markisenanlage ausreicht.

Unter einer Faltmarkisenanordnung wird im Sinne der Erfindung verstanden, dass in sich starre Markisenelemente einen beliebigen Gebäudefrontbereich, also auch eine gerade oder schräg geneigte Dach- oder Terrassenfläche überdecken, u.a. wie ein Fensterladen, ein Türladen, eine Vorhangschale oder dergleichen, so dass die von der Faltmarkisenanordnung bei deren Öffnung freigegebenen Bereiche eines Gebäudebereiches, insbesondere einer Gebäudefront gebäudeseitig weiterhin geschlossen sein können und gegebenenfalls gesondert geöffnet werden kann, wie die öffenbaren und nicht öffenbaren Fensterbereiche z.B. einer verglasten Fassade.

Im Sinne der Erfindung kann es sich bei den Fassaden- oder Markisenelementen um geschlossene Paneele handeln, die als Licht-, Schall-, Wärme- und/oder, Einbruchschutz, als Solarzellenaufnahmeflächen und dergleichen mehr dienen, aber auch aus Öffnungen aufweisenden Paneelen bestehen, die z.B. beabstandete Lamellen oder Löcher aufweisen. Am Markt bekannte so genannte Faltläden fallen sowohl unter Faltfassaden- als auch unter Faltmarkisenanordnungen im Sinne dieser Erfindung. Die erwähnten Schutzfunktionen können noch weiter verbessert werden, wenn die führungsparallelen Kanten der Fassaden- oder Markisenelemente mit Kantenschutzelementen, wie z.B. nach außen oder wie bevorzugt, nach innen abstehenden Stegen versehen sind oder werden.

Unter einem Gebäude oder Gebäudeteil oder Gebäudebereich im Sinne der Erfindung wird im übrigen auch jede offene oder geschlossene Tragkonstruktion verstanden, die eine erfindungsgemäße Faltfassaden- oder Faltmarkisenanordnung aufnimmt oder trägt.

Es versteht sich, dass gewisse Abweichungen der Winkel zwischen den Führungen und den Elementkanten von 90° und/oder einander gegenüberliegender Elementkanten von der Parallelität für den bestimmungsgemäßen Einsatzzweck unschädlich ist und von der erfindungsgemäßen Lehre mit umfasst sein soll.

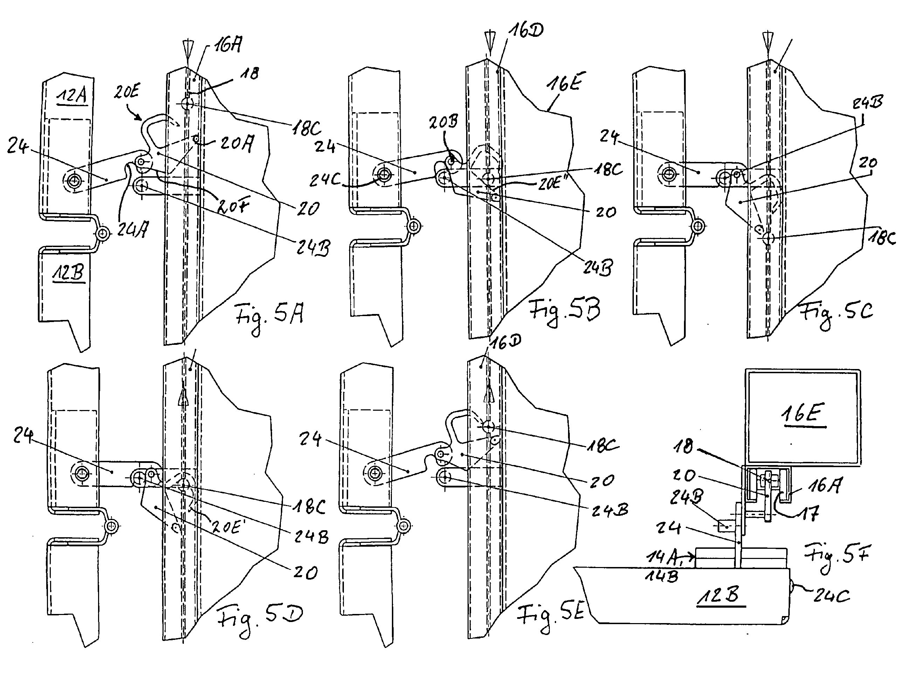

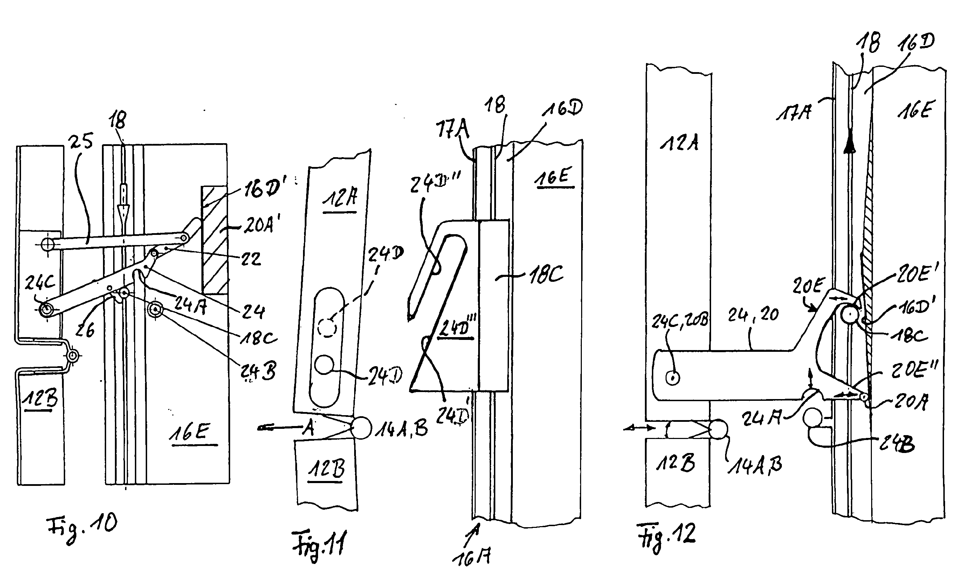

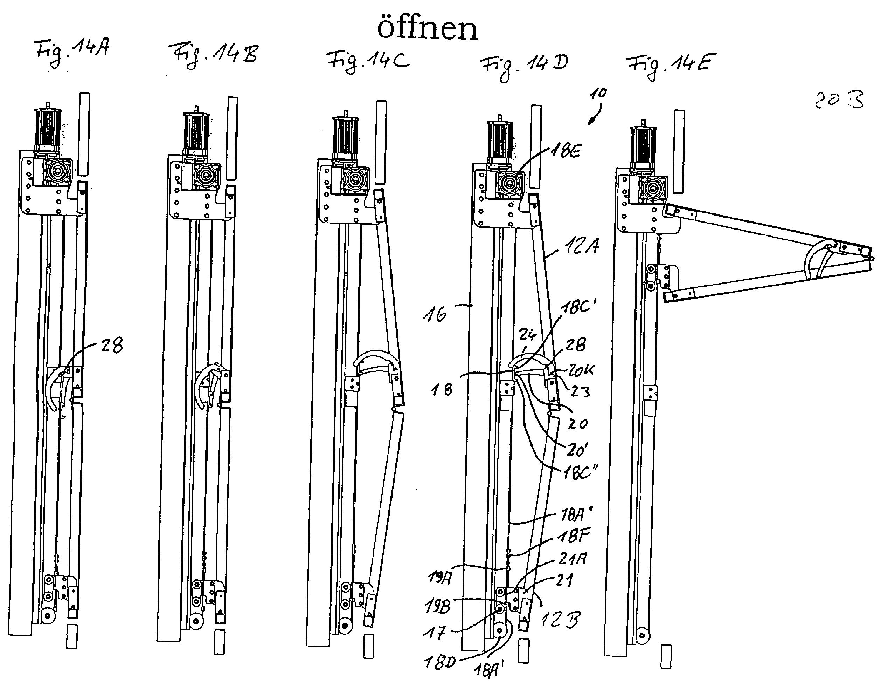

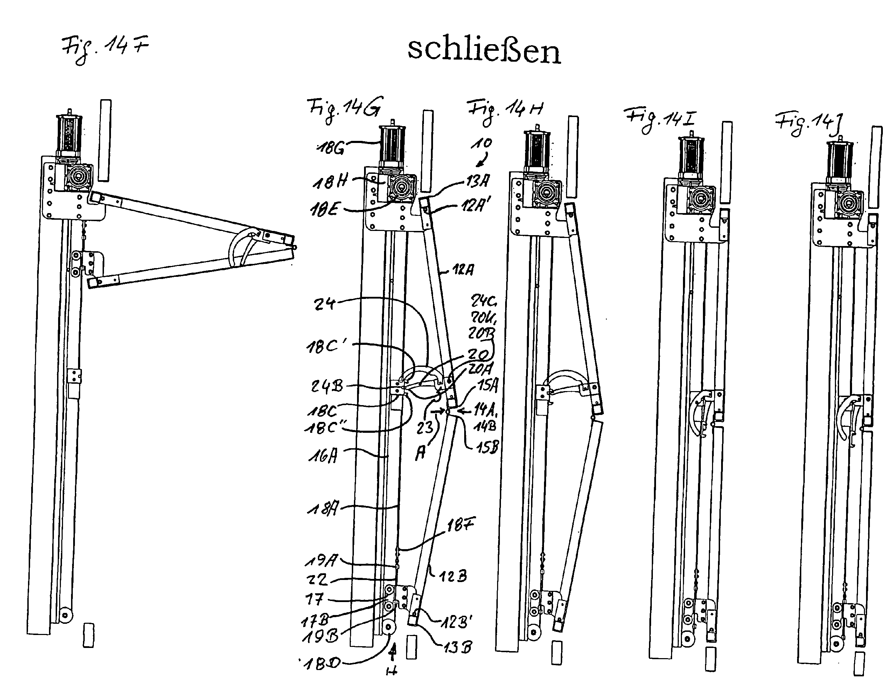

Wenn das Antriebsglied, insbesondere ein Zug- oder Druckelement zum Öffnen der Faltfassaden- oder Faltmarkisenanordnung entlang der Führung bewegt wird, greift der mit ihm vorzugsweise verbundene Mitnehmer in geeigneter Weise an dem Ausknickmittel (nachfolgend als Ausknickhebel bezeichnet) an und schwenkt es von einer bezüglich der Führung, z.B. schräg nach unten geneigten Ausgangslage (im Streckzustand der Fassaden- oder Markisenelemente) bei der Öffnungsbewegung in eine im Wesentlichen rechtwinklige Wirkstellung bezüglich der Führung, was zu einer Abstandsvergrößerung zwischen den Fassaden- oder Markisenelementen und dem Gebäude, also zu einem Ausknicken der Fassaden- oder Markisenelemente aus ihrer geschlossenen Strecklage heraus führt. Der gleiche Effekt wird erreicht, wenn eine ortsfeste Anlagefläche für das freie Hebelende in Ausknickrichtung, d.h. schräg zur Führung für die zweite Elementkante, geneigt ist. Beste Kraftverhältnisse werden erreicht, wenn der Ausknickhebel nahe des Knickbereiches der Faltfassaden- oder Faltmarkisenanordnung angeordnet ist. Wenn das Schwenklager des Ausknickhebels an einem der bewegten Fassaden- oder Markisenelementen angeordnet ist und dementsprechend das freie Hebelende gegenüber dem Gebäude verlagert werden muss, kann die Verlagerungszone besonders funktionssicher in der oder an der für das Öffnen ohnehin erforderlichen gebäudeseitigen Führung angeordnet sein. Dieses abgestützte Verlagern kann gleitend oder rollend (Fig. 5 und 11) oder unter Lagerung an dem Mitnehmer (Fig. 14) erfolgen. Um das Betätigen (Öffnen und Schließen) z.B. auch bei heftigem Wind gefahrlos zu ermöglichen, kann der Ausknick- oder Verriegelungshebel zumindest im Bereich seines freien Endes mit einem Dämpfer für sein Anschlagen an einem gebäudefesten Teil versehen sein: hierbei kann der Dämpfer, z.B. als Rolle ausgestaltet, auch eine Doppelfunktion übernehmen.

Um beim Öffnen zunächst ein hinreichend starkes horizontales Ausknicken der Faltfassaden- oder Faltmarkisenanordnung zu erreichen, bevor wesentliche Zugkräfte auf die untere Fassadensektion ausgeübt werden, kann das Zugelement mit einer Streck- oder Leerwegzone derart versehen werden, dass beim ersten Betätigen des Zugelementes zwar bereits der Ausknickhebel betätigt und/oder ein Verriegelungsmittel entriegelt werden, aber noch keine oder keine nennenswerten Zugkräfte auf das zu bewegende Ende der unteren Fassadensektion ausgeübt werden. Eine auf das Zugelement wirkende Federanordnung kann eine "Schlaffseilsituation" in dieser Ausknickphase im nicht oder nur schwach belastenden Bereich des Zugelementes verhindern, wenn die Schwerkraft in Verbindung mit einer Leerwegzone, wie einem Langloch, im Angriffsbereich zur zweiten Elementkante nicht geeignet ist. Zur Übertragung von Schwenkkraft auf den Ausknickhebel kann das Zug- oder Druckelement des Antriebsgliedes mit mindestens einem an dem Ausknickhebel einseitig oder doppelseitig angreifenden Mitnehmer versehen sein.

Das Antriebsglied, insbesondere ein Zug- und/oder Druckelement, kann weitgehend frei ausgewählt werden. Es kann sich um ein Zugseil, aber auch um eine Kette, oder um eine Zahnstange, einen Zahnriemen, ein Band mit Reibbelag, eine Federanordnung, ein bewegbares Gewicht, ein umlaufendes Zug- und/oder Druckorgan oder eine anderes längliches Antriebsübertragungselement handeln. Das Antriebsglied kann auch umlaufend über obere und untere Umlenkmittel geführt sein und aus einer Kombination eines Zahnriemens auf einer ersten und einem Seil auf einer zweiten Teillänge bestehen, was von eigenständig erfinderischer Bedeutung ist. Es kann mit einem oder mehreren Mitnehmer/n versehen sein oder eine Mitnahmefunktion durch einseitige oder doppelseitige kraftschlüssige Verbindung ermöglichen. Eine Mitnahmefunktion kann durch einen oder mehreren an dem Antriebsglied vorgesehene oder vorsehbare Mitnehmer erfolgen, die aufgrund ihrer Größe und Bauform eine Umlenk- oder Aufwickelstelle relativ einfach passieren können. Damit können ziehharmonikaähnliche, d.h. miteinander verkettete Fassaden- oder Markiselemente auf- und zugefaltet werden - aber ebenfalls auch eine Mehrzahl von voneinander getrennte Fassaden- oder Markisenelemente mit einem Antriebsglied geöffnet und geschlossen werden. Bei größer bauenden Mitnehmern, wie z.B. bei Klauenorganen nach Fig. 11 oder bei einer mit dem Antriebsglied gemeinsam verfahrbaren Scherenanordnung, kann es sich empfehlen, den. z.B. als Schieber oder Rollenapparat gestalteten Mitnehmer 18C vom Antriebsglied 18 abzukoppeln, wenn er z.B. etwa in der Nähe einer oberen oder unteren Umlenkung, einer Aufwicklung des Antriebsglieds 18 oder dergleichen angelangt.

Sobald die Faltfassaden- oder Faltmarkisenanordnung hinreichend weit ausgeknickt ist, kommt der Ausknickhebel außer Eingriff von seiner gebäude- oder faltelementseitigen Anlage. Um den Ausknickhebel danach wieder in eine Ausgangsposition zu überführen, in welcher er bei einem erneuten Öffnungsvorgang sich wieder in seiner Funktionsstellung befindet, kann der Ausknickhebel durch ein Gegengewicht entsprechend ausbalanciert sein, oder z.B. unter Federkraft in eine gewünschte Funktionsstellung zurückgeführt werden.

Grundsätzlich ist es möglich, dem Ausknickhebel eine Doppelfunktion zu verleihen, und ihn gleichzeitig für das Verriegeln in der Strecklage der Faltfassaden- oder Faltmarkisenanordnung zu verwenden - oder umgekehrt. Es kann zu diesem Zweck insbesondere eine Hebelanordnung aus zwei drehfest miteinander verbundenen und dieselbe Schwenkachse aufweisenden schwenkbaren Hebeln vorgesehen sein, von denen der eine dem Ausknicken und der andere dem Heranziehen und/oder Verriegeln dient.

Um besonders hohe Schließkräfte sicher zustellen, wird ein Verriegelungs- und/oder Heranziehmittel - nachfolgend als Verriegelungs- und/oder Heranziehhebel bezeichnet - vorgeschlagen, der mit einem Verriegelungsanschlag zusammenwirkt, und der von einem Mitnehmer beim Öffnen der Faltfassaden- oder Faltmarkisenanordnung zunächst aus seiner Verriegelungslage herausgeschwenkt wird, ohne dass dabei bereits ein nennenswertes horizontales Ausknicken der Faltfassadenanordnung bewirkt wird. Auch bei dieser Anordnung ist es möglich, das Schwenkgelenk des Verriegelungshebels, wie in der Regel bevorzugt, an einem der Fassaden- oder Markisenelemente anzuordnen und den Verriegelungsanschlag gebäudeseitig vorzusehen. Die umgekehrte Anordnung ist aber auch hier möglich. Die Wirkungsweise des Mitnehmers und des ihn vorzugsweise antreibenden oder bewegenden Zug- oder Druckelementes mit einer anfänglichen Bewegung ohne Wirkung auf das bewegte Ende der Fassaden- oder Markisenelemente ist prinzipiell die gleiche, wie bei dem Ausknickhebel. Im Übrigen ist die Verriegelungs- und/oder Heranziehanordnung von eigenständiger erfinderischer Bedeutung.

Um die Funktionen des Ausknickhebels um die Funktionen einer Verriegelung zu erweitem - bzw. umgekehrt die Verriegelung um die Funktion des Außenhebels zu erweitern, kann eine zweigliedrige Hebelanordnung vorgesehen sein, bei der das Schwenkgelenk des Ausknickhebels an einem Zwischenhebel mit Verriegelungsfunktion angeordnet ist, wobei die Betätigung der Hebelanordnung vorzugsweise wiederum über ein Zug- oder Druckelement erfolgt. Bei dieser Anordnung bewegt das Zug- oder Druckelement bei seinem ersten Betätigen den als Verriegelungshebel dienenden Zwischenhebel aus seiner Verriegelungsposition heraus, so dass die Möglichkeit des horizontalen Ausknickens der Faltfassaden- oder Faltmarkisenanordnung hergestellt wird. Beim fortgesetzten Angreifen des Zug- oder Druckelementes an dem Ausknickhebel wird das Ausknicken in einem Zuge mit der Öffnungsbewegung der Fassaden- oder Markisenelemente bewerkstelligt, wobei jeglicher zusätzliche Antrieb für das Entriegeln und/oder Ausknicken eingespart wird.

Wenn die Betätigungsvorrichtung (Verriegelungs- und/oder Ausknickvorrichtung) der Faltfassaden- oder Faltmarkisenanordnung randseitig der Fassaden- oder Markisenelemente so angeordnet wird, dass sie mit zumindest einer der seitlichen Führungen für das bewegte Fassaden- oder Markisenende zusammenwirkt, bleibt die Sichtfläche der Fassaden- oder Markisenelemente auf ihren beiden Seiten (innen und außen) frei von optisch störenden Mechanikbauteilen und wird ein Doppelnutzen der Führungen und der Zug oder Druckelemente erreicht. Die Führungen können auch optisch günstig eingehaust sein, wobei ein Führungsschlitz für die Öffnungsfunktion und eine Aussparung für den Eingriff und die Betätigung des Betätigungselementes sichtbar bleiben.

In Weiterbildung der Erfindung kann es wünschenswert sein, dass
der Ausknickhebel nahe des zugeordneten Ausknickgelenkes zugeordnet ist;
das Schwenklager des Ausknickhebels an einem der Fassaden- oder Markisenelemente angeordnet ist;
der Ausknickhebel Mittel zum Heranziehen und/oder zum Verriegeln der Faltfassaden- oder Faltmarkisenanordnung in eine/r Strecklage der Fassaden- oder Markisenelemente aufweist;
eine zweigliedrige verkettete Hebelanordnung, bestehend aus dem Ausknickhebel und einem Zwischen- oder Koppelhebel vorgesehen ist;
der Zwischen- oder Koppelhebel ein Verriegelungsmittel umfassender Verriegelungshebel ist;
das Zug- oder Druckelement derart an der zweiteiligen Hebelanordnung, insbesondere an dem Ausknickmittel angreift, dass zunächst das Heranzieh- und/oder Verriegelungsmittel unter Entriegeln der Fassaden- oder Markisenelemente aus der das Ausknicken verhindernden Arbeitsposition verlagert wird und die Ausknickbewegung folgt;
ein Heranziehen und/oder Verriegeln mindestens eines der Fassaden- oder Markisenelemente bezüglich mindestens einer der Führungen in Strecklage bewirkendes Verriegelungsmittel vorgesehen ist und dass mindestens ein Mittel vorgesehen ist, das das Verriegelungsmittel zu Beginn der Öffnungsbewegung außer Eingriff bringt;
mindestens ein Mittel zum außer Eingriff bringen an dem Zug- oder Druckelement vorgesehen ist;
die Streckzone eine auf das Zugelement wirkende Federanordnung umfasst;
eine Leerwegzone ein Langloch umfasst;
das Antriebsglied mit dem mindestens einen Mitnehmer versehen ist;
mindestens ein Mitnehmerelement am freien Ausknickhebelende vorgesehen ist;
die Markisenelemente Sichtflächen aus durchsichtigem, durchscheinendem oder durchbrochenem Material aufweisen und/oder Wärmedämmungspaneele und/oder Schallschutzpaneele sind und/oder Einbruchschutzpaneele sind;
mindestens eines der Markisenelemente Solarzellenträger ist oder als Solarzelle oder eine Solarzellenanordnung ausgestaltet ist;
der Ausknickhebel einen Anschlag zum Begrenzen des Schwenkwinkels des Ausknickhebels bezüglich eines Zwischenhebels oder eines verschwenkbaren Verrieglungsmittels der verketteten Hebelanordnung aufweist;
ein verschwenkbarer Zwischenhebel oder ein verschwenkbarer Verrieglungshebel zweigliedrig mit zueinander verschwenkbaren Hebelgliedern ausgeführt ist und die Hebelglieder in der Verriegelungsposition eine als Arretiermittel dienende Winkelposition miteinander einnehmen;
das Antriebsglied endlos ist;
eine umlaufende Seil-/Zahnriemen-Kombination oder eine umlaufende Rollenkette als Antriebsglied vorgesehen ist;
mindestens ein Ausknickhebel, der an einem der Fassaden- oder Markisenelemente gelagert ist, eine durch im Strecksinne belastete das Ausknicken fordernde Scherenanordnung bildet, die über ein Spannorgan durch einen sich mit dem Antriebsmittel bewegenden Mitnehmer im Stauchsinne unter Heranziehen des mindestens einen Fassaden- oder Markisenelementes in ihrer Wirklänge verkürzt;
ein Lenkhebel zur Bewegungssteuerung des Ausknickhebels bezüglich des von dem Antriebsglied und unabhängig von dem Ausknickhebel verschwenkten Verriegelungshebel vorgesehen ist;
ein als Schieber oder Rollenapparat gestalteter Mitnehmer, wie ein verfahrbares Klauenorgan, vom Antriebsglied abkoppelbar ist, wenn er z.B. etwa in der Nähe einer oberen Umlenkung, einer Aufwicklung des Antriebsglieds oder dergleichen gelangt;
mindestens eine führungsparallele Kante der Fassaden- oder Markisenelemente mit Kantenschutzelementen, wie z.B. mit mindestens einem nach außen oder, wie bevorzugt, nach innen abstehende Steg versehen sind und/oder geschützt werden;
ein etwa vorhandener Ausknick- oder Verriegelungshebel zumindest im Bereich seines freien Endes mit einem Dämpfer für sein Anschlagen an einem gebäudefesten Teil versehen ist;
an einem der Fassaden- oder Markisenelemente ein Klauenorgan vorgesehen ist, das einerseits von einer, insbesondere von der Rückseite des einen Fassaden- oder Markisenelemente gebildeten, Öffnungsklaue und andererseits von einer, insbesondere mit Hilfe einer von der Rückseite des einen Fassaden- oder Markisenelementes abstehenden Lasche oder einem gleich wirkenden Element gebildeten, Schließklaue gebildet wird, und den Eingriff des freien Endes in das Klaueninnere gestattet.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung der zugehörigen Zeichnung und Tabelle, in der - beispielhaft - Ausführungsbeispiele einer horizontalen Faltfassadenanordnung dargestellt sind.

In der Zeichnung zeigen
- Fig. 1 mit Detail "A": eine horizontale Faltfassaden- oder Faltmarkisenanordnung in gestreckter Schließlage perspektivisch;
- Fig. 2: von einer Faltfassaden- oder Faltmarkisenanordnung ein erstes Ausführungsbeispiel einer kombinierten Entriegelungs- und Ausknickanordnung entsprechend einer rechten Seitenansicht von Figur 1;
- Fig. 3A-3C u. 3E-3G: von einer Faltfassaden- oder Faltmarkisenanordnung ein zweites Ausführungsbeispiel einer kombinierten Entriegelungs- und Ausknickanordnung entsprechend einer rechten Seitenansicht von Figur 1A als Bewegungssequenz für das Schließen (Fig. 3A-3C) und für das Öffnen (Fig. 3E-3G);
- Fig. 4A-B: eine dritte Ausführungsform einer Faltfassaden- oder Faltmarkisenanordnung, in der Fig. 4A die Anordnung von oben als Ganzes und im Detail und Fig. 4B eine vertikale Schnittansicht der Entriegelungs- und Ausknickanordnung darstellt - Schnitt entlang der Linie IVB-IVB gemäß Fig. 4A zeigen;
- Fig. 5A-5F: von einer weiteren Ausführung einer Faltfassaden oder Faltmarkisenanordnung und einem Bestätigungselement hierfür eine Schließ- und Öffnungssequenz in der Schnittdarstellung gemäß Figur 3 (Figuren 5A bis 5E) sowie entsprechend der Schnittdarstellung in Figur 4A (Fig. 5F);
- Fig. 6A-6C: eine weitere alternative Ausführungsform einer Faltfassaden- oder Faltmarkisenanordnung in Ansicht von außen (Fig. 6A), in Vertikalschnittdarstellung A-A gem. Fig. 6A (Fig. 6B) sowie in einer weiteren Vertikalschnittdarstellung B-B gem. Fig. 6A (Fig. 6C);
- Fig. 7A-7C: eine noch weitere Ausführungsform einer Faltfassaden oder Faltmarkisenanordnung in Seitenansicht und teilweise geöffnet (Fig. 7A) und in zwei Arbeitspositionen der Betätigungsvorrichtung in Vertikalschnittdarstellung entsprechend Fig. 3, wobei Fig. 7B die Situation am Anfang der Verriegelungsphase und Fig. 7C die Situation am Ende der Verriegelungsphase darstellt;
- Fig. 8A/B: eine scherenartige Betätigungsvorrichtung für eine Faltfassaden- oder Faltmarkisenanordnung in vertikaler Schnittdarstellung entsprechend Fig. 3, wobei Fig. 8A eine Strecklage und Fig. 8B die Heranziehphase, entsprechend auch der Ausknickphase darstellt;
- Fig.9A-9D: eine andere Betätigungsvorrichtung ähnlich der gemäß Fig. 3, jedoch mit sich seitlich (und nicht frontal) öffnenden Führungsschienen, wobei Fig. 9A eine Draufsicht von außen, Fig. 9C dem Beginn der Heranziehphase im seitlichen Vertikalschnitt, entsprechend Fig. 3, Fig. 9B die Strecklage bei Beginn des Entriegelungsvorgangs im seitlichen Vertikalschnitt (Schnitt AA gemäß Fig. 9A) sowie Fig. 9D die Betätigungsvorrichtung im Horizontalschnitt (Schnitt B-B gemäß Fig. 9A) zeigen;
- Fig.10: ein weiteres Ausführungsbeispiel einer Betätigungsvorrichtung im seitlichen Vertikalschnitt entsprechend Fig. 3 mit einem Lenkerhebel;
- Fig. 11: eine weitere Betätigungsvorrichtung einer Faltfassaden- oder Faltmarkisenanordnung in seitlicher Schnittdarstellung entsprechend Fig. 3 mit einem Klauenorgan;
- Fig.12: eine noch weitere Betätigungsvorrichtung einer Faltfassaden- oder Faltmarkisenanordnung in seitlicher Schnittdarstellung entsprechend Fig. 3 mit einem einarmigen Hebel mit Doppelfunktion (Verriegeln und Ausknicken) sowie
- Fig. 13A-C: eine noch weitere Betätigungsvorrichtung einer Faltfassaden- oder Faltmarkisenanordnung in seitlicher Schnittdarstellung entsprechend Fig. 3 mit einem zweiarmigen Hebel mit Doppelfunktion (Verriegeln und Ausknicken).
- Fig. 14A-J: eine weitere alternative Ausführungsform einer Faltfassaden- oder Faltmarkisenanordnung in Seitenansicht in einer Öffnungssequenz (Fig. 14A-E) und in einer Schließsequenz (Fig14F-J), teilweise auch im Detail.

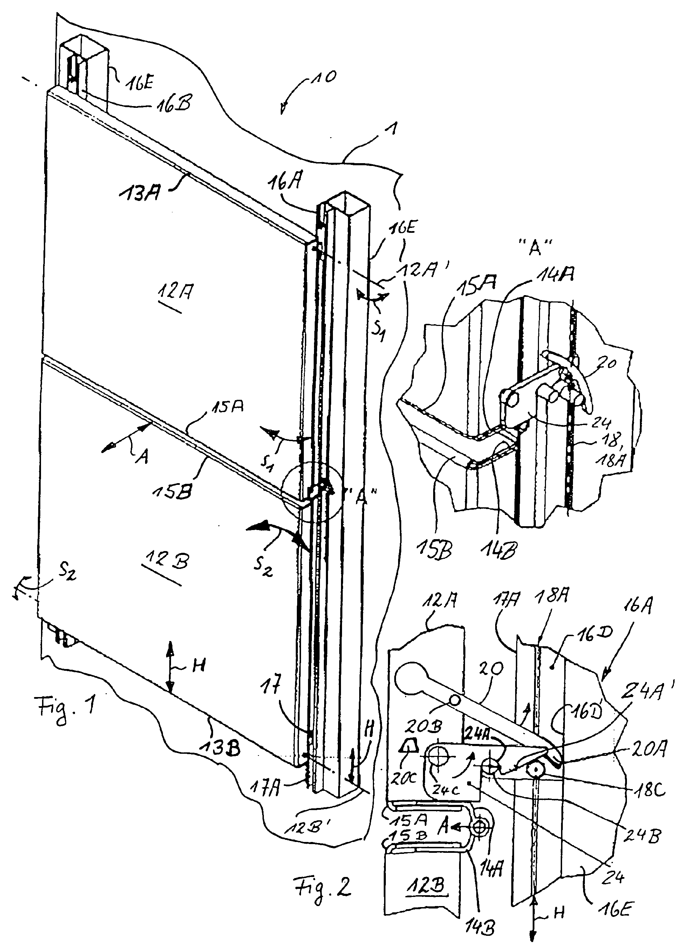

Aus Figur 1 ergibt sich eine Faltfassaden- oder Faltmarkisenanordnung, die sowohl zum öffenbaren Verschließen von Gebäudeöffnungen als auch als offenbare Vorhangfassade nutzbar ist. Sie umfasst zwei in sich starre, paarweise vorgesehene Fassaden- oder Markisenelemente 12A und 12B, von denen das erste, in diesem Ausführungsbeispiel das oberste, Fassaden- oder Markisenelement 12A um eine ortsfeste und in diesem Falle horizontale Achse 12A' schwenkbar an einem mit 1 angedeuteten Gebäude indirekt befestigt ist. Die Befestigung erfolgt über längliche, an dem Gebäude 1 befestigte, mit Führungen 16A und 16B versehene stabförmige Trageprofile 16E. Die Achse 12A' ist bezüglich der beiden Führungen 16A und 16B gelagert. Das im Falle dieses Ausführungsbeispiels untere, zweite Fassaden oder Markisenelemente 12B ist nahe seiner (zweite).Elementkante 13B, d.h. vorliegend am unteren Ende, in je einer der Führungen 16A und 16B endseitig gehalten und vertikal verlagerbar und dabei in Richtung der Doppelpfeile S₂ beim Anheben schwenkbar. Der Elementkante 13B im wesentlichen parallel gegenüberliegend weist das zweite Fassaden- oder Markisenelement 12B eine (zweite) Ausknickkante 15B auf, zu der sich benachbart eine (erste) Ausknickkante 15A des benachbarten ersten Fassaden- oder Markisenelementes 12A befindet, welche zur ortsfesten Schwenkachse 12A' im wesentlichen parallel angeordnet ist. Nahe dieser beiden Ausknickkanten ist ein ein- oder mehrteiliges Ausknickgelenk 14A, 14B ausgebildet, das die beiden Ausknickkante 15A, 15B schwenkbar miteinander verbindet, und zwar losgelöst von den Führungen 16A und 16B, sodass ein Ausknicken (siehe Doppelpfeil A) zur Fassade möglich ist.

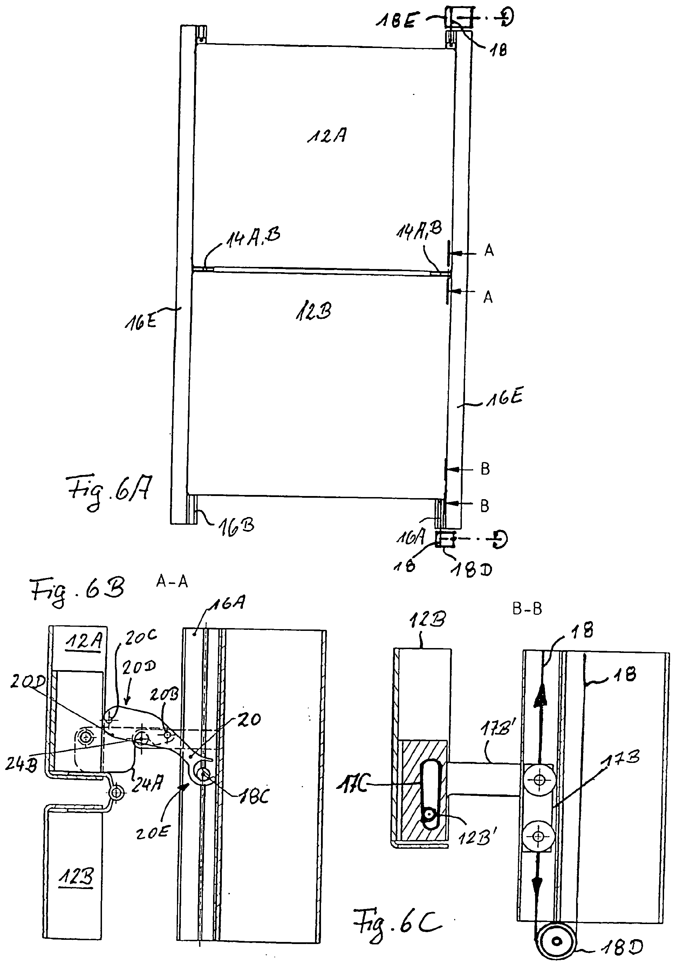

Bewirkt wird ein Öffnen und Schließen dieser Faltfassaden- oder Faltmarkisenanordnung, dadurch, dass in der Regel je ein längliches Antriebsglied, wie Zugelement 18A entlang der Führungen 16A und 16B angeordnet und in geeigneter Weise z.B. durch Aufwickeln oder umlaufende Bewegungen (Fig. 14) oder Verschieben oder andere Linearbewegung antreibbar ist. Das Zugelement ist nahe der freien Elementkante 13B, z.B. im Bereich von dort endseitig angeordneten Führungsrollen 17, die in den Führungen 16A und 16B laufen, befestigt. Sie sind vorzugsweise paarweise sowie mit vertikalem Abstand an einen Führungswagen oder -schieber angeordnet (vgl. Fig. 6C), der dadurch winkelsteif bleibt.

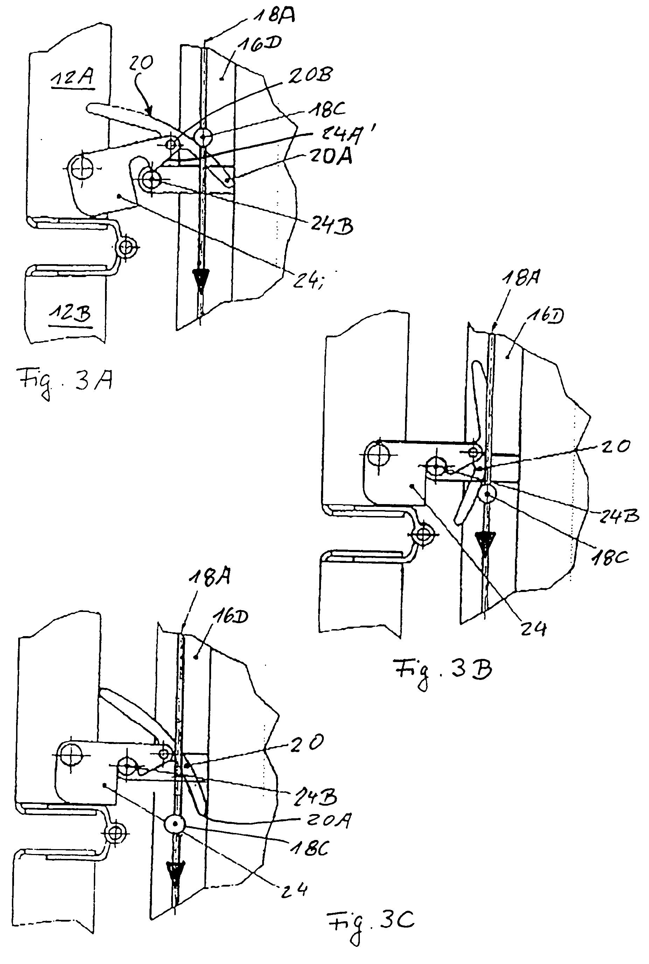

Auf diese Weise ist der in Figur 3A angedeutete und in Figur 3B vollendete Bewegungsablauf zum Öffnen und umgekehrt zum Schließen, ausführbar. Die Führungen 16A und 16B befinden sich nahe der seitlichen Ränder der Fassaden - oder Markisenelemente 12A und 12B. Hierdurch lässt sich eine größere verkleidete Fassade aufbauen, die sowohl aus ortfesten als auch aus den hier dargestellten bewegbaren Elementen 12A und 12B bestehen kann. Natürlich sind auch Ausführungen wie bei einem großen Tor mit einer Tür oder dergleichen realisierbar.

Die Fassaden- oder Markisenelemente 12A und 12B können sehr unterschiedlich aufgebaut sein und zu unterschiedlichen Zwecken dienen, z.B. als Einbruch- und/oder Schallschutzplatten, als blinde, durchsichtige oder durchscheinende Vorhangfassade mit oder ohne Durchbrechungen, also als Klimatisierungsmittel. Ebenso können sie als Wärmedämm- oder Wärmeschutzplatten vor Wärmeabstrahlung über Tag oder vor nächtlicher Wärmeabstrahlung des Gebäudes 1 schützen. Sie können auch als Solarpaneele dienen oder solche tragen, wobei hierfür in erster Linie das erste Fassaden- oder Markisenelement 12A in Betracht kommt und dem Sonneneinfallswinkel entsprechend im Tagesverlauf nachgeführt werden kann. Ebenso können sie Lochplatten, aufgespannte Gitter- oder Gewebeelemente oder Lamellenanordnungen aus beabstandeten Abschattungs-Lamellen als Flächenelement aufweisen, ggf. unter Verwendung eines Rahmens.

Der obere Drehpunkt des oberen Faltelementes kann unabhängig von einer für beide Seiten der Anordnung zuständigen Antriebswelle angeordnet werden. In allen Figuren ist dieser Drehpunkt aber innerhalb einer Konsole zusammen mit der Antriebswellenbefestigung dargestellt.

Die Drehpunkt-Positionen können völlig unterschiedlich sein. Dadurch kann, je nach Auswahl, ein kleinerer oder größerer Faltwinkel erreicht werden. Lediglich der Abstand zwischen Antriebswelle und Unterkante des Faltelementes 12 B (13 B) ist aufgrund des Freilaufes, der Höhe des Laufwagens und der Seilverbindung vorgegeben.

Es ist auch möglich, dass die Antriebswelle und die seitlichen Führungsschienen aus diesem Grund verdeckt hinter der Fassade liegend höher gezogen werden.

Um für ein Solarpaneel, eine Regenschutz- oder Sonnenschutz-Beplankung eine möglichst große Tiefe zum festen Baukörper im hochgezogenen Zustand zu erreichen, kann die Beplankung des oberen Faltelementes (12 A) über das untere Ende (15 A) hinausragen- und zwar maximal bis zur unteren Kante 13 B des unteren Faltelementes. Die Ausführung kann dann so ausgestaltet sein, dass anstelle des unteren Fassadenelementes (12 B) links und rechts nur noch 2 senkrechte Profilarme verwendet werden, die unten mit dem Laufwagen und oben gelenkig mit dem oberen Fassadenelement 12 A verbunden sind.

Das Knickgelenk 14A, 14B kann als durchgehendes Bandprofil ausgeführt sein. Die Fassaden- oder Markisenelemente 12A und 12B können frei von optisch störenden Anbauten sein, denn die nachfolgend beschriebene Betätigungsvorrichtung (siehe Detail "A") ist unmittelbar im Bereich eines oder beider Seitenränder der Fassaden- oder Markisenelemente in flachbauender Weise unterbringbar, so dass unter Einhaltung einer Abstandsfuge weitere Fassadenverkleidungselemente oder Faltfassaden- oder Faltmarkisenanordnungen angeschlossen werden können, ohne ästhetisch störende Mechanikteile.

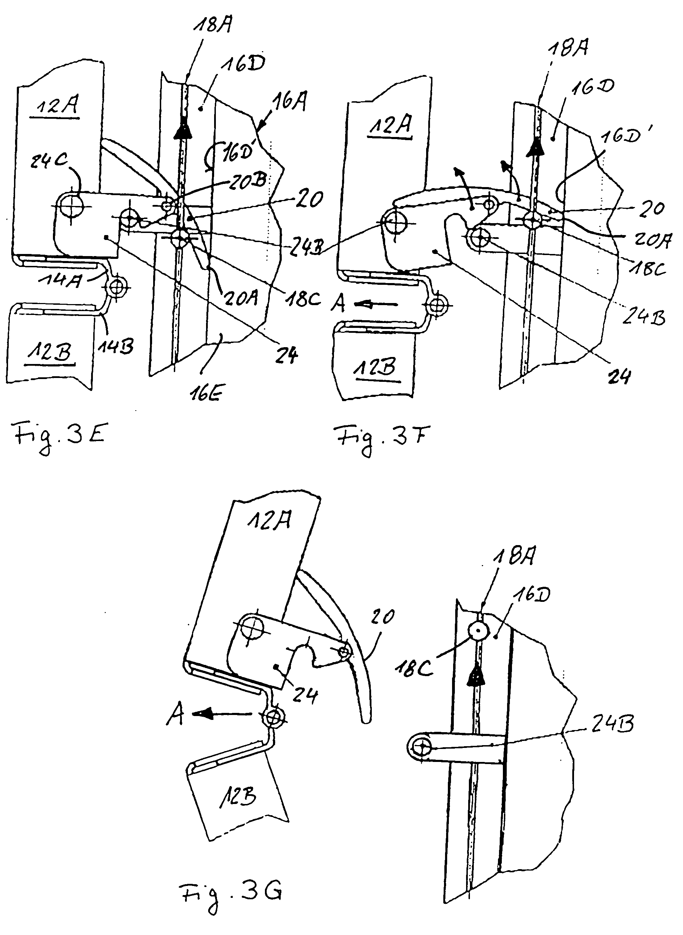

Während die im Detail "A" der Figur 1 dargestellte Betätigungsvorrichtung im Zusammenhang mit Figur 3 näher erläutert wird, wird nachfolgend zunächst ein erstes Ausführungsbeispiel einer Betätigungsvorrichtung im Zusammenhang mit Figur 2 beschrieben: Innerhalb einer Führungskammer 16D der Führung 16A, 16B ist in an sich bekannter Weise jeweils eine, ggf. paarweise ausgeführte Führungsrolle 17 oder Führungsrollenanordnung nahe den Enden der zweiten Elementkante 13B verfahrbar. Ein in dem Ausführungsbeispiel als Drahtseil ausgebildetes Zugelement 18A verläuft ebenfalls in der Führungskammer 16D und weist einen Mitnehmer 18C auf, der mit dem Zugelement 18A aufwärts bzw. abwärts (Doppelpfeil H) bewegt werden kann.

Im Bereich des Knickgelenkes 14A, 14B ist ein ausbalancierter Ausknickhebel 20 über sein Schwenklager 20B an mindestens einer Seitenkante des ersten Fassaden- oder Markisenelementes 12A nahe der ersten Ausknickkante 15A schwenkbar gelagert angeordnet und (in der in Figur 2 dargestellten Strecklage der Fassaden und Markisenelemente) nach schräg unten geneigt. Sein freies Ende 20A wird in Anlage mit der Rückwand (16D') der Führungskammer 16D der Führung 16A mittels eines Kontergewichtes oder alternativ einer Federanordnung gehalten. Das freie Ende des in sich flach ausgebildeten Ausknickhebels 20 erstreckt sich durch den (hier frontseitigen) üblichen Führungsschlitz 17A, durch den auch die Führungsrolle 17 an das Fassaden- oder Markisenelement 12A, 12B angebunden ist, hindurch.

Die Funktion des Ausknickhebels 20 anhand Fig. 3 ist folgende: Wenn der Mitnehmer 18C innerhalb der Führung 16D in dem dargestellten Fall von unten an dem Ausknickhebel 20 zur Anlage kommt und sich weiter in Öffnungsrichtung, also hier nach oben, bewegt, schiebt sich das freie Hebelende 20A entlang der Rückwand 16D' der Führung 16D unter Hochschwenken des Ausknickhebels 20 nach oben, wodurch eine Abstandsvergrößerung zur um die Achse 12A' schwenkbaren Ausknickkante 15A erfolgt. Erst wenn dieser anfängliche Ausknick- oder Ausziehvorgang erfolgt ist, beginnt die Zugwirkung des unteren Endes des Zugelementes 18A auf die freie Elementkante 13B in Richtung nach oben. Aufgrund des bereits erfolgten anfänglichen Ausknickens kann der Ausknickvorgang nunmehr reibungslos unter Öffnen der Faltfassaden- oder Faltmarkisenanordnung in Richtung auf den völligen Öffnungszustand hin fortgeführt werden. Damit das Zugelement 18A auch während der anfänglichen Ausknickbewegung unter Hochschwenken des Ausknickhebels 20 hinreichend straff gehalten wird, ist eine in der Zeichnung nicht näher dargestellte Streckzone 22 (vgl. im Gegensatz dazu Leerlaufzone in Fig. 11) des Zugelementes 18A vorgesehen, die z.B. durch eine Feder oder Gewichtsanordnung ausgeführt sein kann. Diese Streckzone hält das Zugelement 18A elastisch (Feder) oder unelastisch (Gewicht) unter Vorspannung. Wegen der geringen für das Bewegen des Ausknickhebels benötigten Kraft kann sich während der anfänglichen Ausknickphase ein Schlaffseilabschnitt des Zugelementes durch Straffen vermieden werden und zum Anheben der zweiten Elementkante 13B am Ende des anfänglichen Ausknickweges unter volle Zugspannung gelangen.

In dem Ausführungsbeispiel nach Figur 2 ist ferner eine Verriegelungseinrichtung vorgesehen, die die Fassaden- oder Markisenelemente in der dargestellten Strecklage im Bereich des Knickgelenkes 14A, 14B gegen Querbewegungen festhält. Hierzu dient als Verriegelungsmittel 24 ein Verriegelungshebel 24, der schwenkbar an dem ersten Fassaden- oder Markisenelement 12A nahe des Knickgelenkes befestigt ist und ein Verriegelungsanschlag 24B, der ortsfest an der Führung 16A befestigt ist. Eine gleichzeitig als Aufgleitebene für das Verriegeln mit dem Verriegelungsanschlag 24B dienende Hebelfläche 24A' dient auch als Anschlag für den Mitnehmer 18C zum Öffnen. Bei der Öffnungsbewegung kommt der Mitnehmer 18C zunächst mit dieser Hebelfläche 24A in Kontakt und hebt den Verriegelungshebel 24 aus der Verriegelungslage heraus. Erst dann kommt der Mitnehmer 18C in Kontakt mit dem Ausknickhebel 20, um den weiter oben beschriebenen Ausknickvorgang einzuleiten. Eine derartige Verriegelung ist als solche aber auch ohne den Ausknickhebel verwendbar.

Das Ausführungsbeispiel nach Fig. 1 (Detail "A") wird nachfolgend anhand der Bewegungssequenz gemäß Fig. 3A bis 3G näher erläutert: Abweichend von dem Ausführungsbeispiel nach Fig. 2 ist bei diesem Ausführungsbeispiel der (ebenfalls ausbalancierte) Ausknickhebel 20 mit seinem Schwenklager 20B nahe des freien Endes eines Verriegelungsmittels schwenkbar befestigt und bildet mit dem Verriegelungshebel 24, der als Zwischenhebel dient, eine zweigliedrige Hebelanordnung derart, dass zunächst der Zwischenhebel bei der Öffnungsbewegung zum Entriegeln gebracht wird, bevor der fortschreitende Mitnehmer 18C die Ausknickbewegung einleitet, wie im Wesentlichen bereits im Zusammenhang mit Fig. 2 beschrieben. Die Ausknick-Sequenz der in Figuren 3E bis 3G zeigt die noch verriegelte Strecklage Fig. 3E, die bereits entriegelte und zum ersten Ausknicken eingenommene Todpunktlage des Ausknickhebels 20 (Fig. 3F) sowie einen Zustand deutlichen Ausknickens, bei dem die freie Elementkante 13B bereits ein gewisses Stück angehoben ist. Die Schließ-Sequenz gemäß Figuren 3A bis 3C verdeutlicht, wie bei der abschließenden Bewegung in die Strecklage der Fassadenoder Markisenelemente 12A und 12B die Hebelfläche 24A' als Auflauffläche auf dem Verriegelungsanschlag 24B dient. Nach dem Einschnappen in die Verriegelungsposition (Fig. 3B) passiert der Mitnehmer 18C an der gebogenen Außenseite des Ausgangshebels 24 nach unten, bis er an eine Stelle unterhalb des freien Endbereichs 20A des Ausgangshebels 20 gelangt ist (Fig. 3C). Damit ist der Schließvorgang abgeschlossen und der Mitnehmer 18C befindet sich in einer Position unterhalb des Ausknickhebels 20, so dass er beim Wiederanheben unter den Ausknickhebel 20 und die damit verketteten Verriegelungsmittel gelangt.

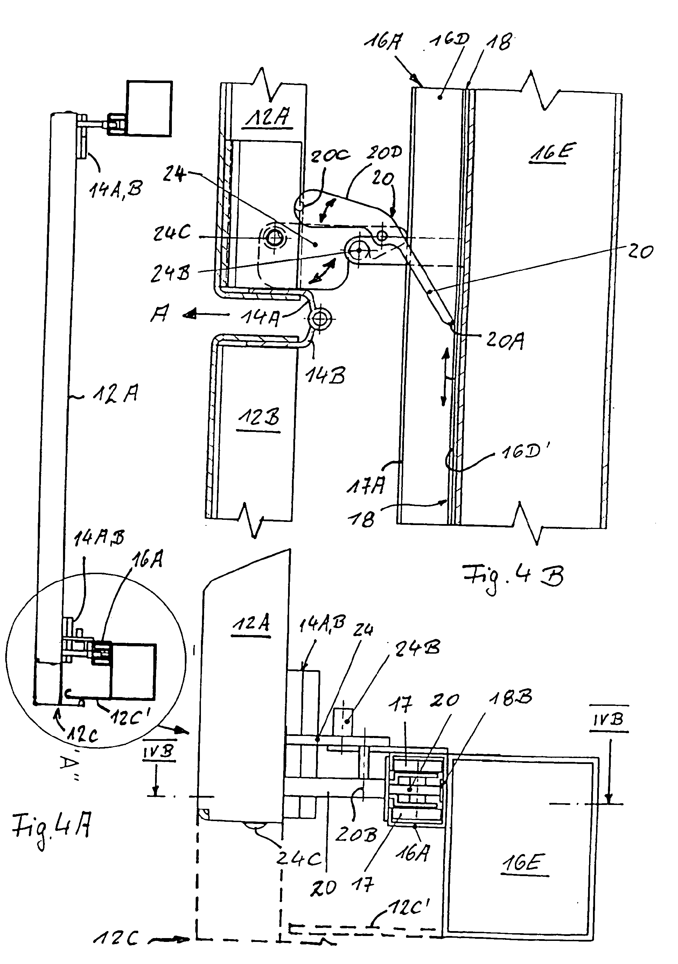

Das Ausführungsbeispiel nach Figuren 4A/B unterscheidet sich von dem vorangehenden im Wesentlichen dadurch, dass als druckfestes Zugelement 18A ein Flachband mit hinreichend rauer Oberfläche verwendet wird, so dass kein eigenständiger Mitnehmer erforderlich ist, um das freie Ende 20A des Ausknickhebels 20 bei der Öffnungsbewegung mitzunehmen. Ein Anschlag 20C sorgt für eine Schwenkbegrenzung des mit einem Kontergewicht 20D ausgestatteten Ausknickhebels 20. Beim Schließvorgang läuft das Zugelement 18A (bei an ihm anliegenden freien Ende 20A des Ausknickhebels 20) problemlos nach unten.

Dem Detail "A" von Fig. 4A ist der kompakte innere Aufbau der Führung 16A entnehmbar, in der das Antriebsglied 18, die Führungsrollen 17 für das zweite Fassaden- oder Markisenelement sowie der in die Führungskammer 16D hineinragende Teil des Ausknickhebels 20 untergebracht ist. Ferner ist ein Kantenschutzelement 12C an einer der Seitenkanten der Fassaden- oder Markisenelemente 12A/12B mit einem zur Führung hin weisenden Steg vorgesehen, der als Alternative oder auch als Ergänzung (Steg 12C') an der Führung vorgesehen sein kann.

Das Ausführungsbeispiel nach Fig. 5A bis 5F unterscheidet sich von dem Ausführungsbeispiel nach Fig. 3A-3G dadurch, dass ein nicht ausbalancierter Ausknickhebel 20 verwendet wird und dass dieser Ausknickhebel ein Klauenelement 20E aufweist. Bei diesem Ausführungsbeispiel ist der Ausknickhebel 20 relativ zum Verriegelungshebel 24 unter Federlast in eine Strecklage, (Fig. 5A) bringbar, ebenso wird das Verriegelungsmittel unter Federbelastung in eine nach leicht oben geneigte Ausgangsposition gebracht (Fig. 5A). Wie aus Fig. 5A ersichtlich, fährt beim Schließvorgang der Mitnehmer 18C in das Klauenelement 20E ein und schwenkt bei weiteren Absenken den Ausknickhebel 20 nach unten, wobei eine Anlagefläche 20F des Ausknickhebels 20" nahe seines Schwenklagers 20B das Heranziehen des Knickgelenkes 14A, 14B in die Streck- und Verriegelungslage fördert oder ermöglicht (Fig. 5B). Nach Abschluss des Verriegelungsvorganges, wenn also das Verriegelungsmittel 24A in den Verriegelungsanschlag greift (Fig. 5C), kann der Mitnehmer 18C im Bedarfsfalle auch wieder aus dem Klauenelement 20E (nach unten) herausfahren, was für die weitere Funktion aber nicht zwingend erforderlich ist, wie aus der Mitnehmerposition in Fig. 5D ersichtlich. Von dieser Position (Fig. 5D) ausgehend bewirkt der Mitnehmer beim Anheben des Antriebsgliedes 18 an der der Schließklaue 20E' gegenüber liegenden Öffnungsklaue 20E ein Hochschwenken des Verriegelungshebels 24, während die Öffnungsklaue 20E' noch an der Rückwand der Führungskammer 16D gleitend anliegt und so ein Hochschwenken des Ausknickhebels 20 in dieser Phase noch verhindert. Erst wenn das Verriegelungsmittel 24A vor dem Verriegelungsanschlag 24B frei ist, kann der Ausknickhebel 20 unter dem Zug des Mitnehmers 18C nach oben schwenken und dabei die gewünschte Abstandsvergrößerung des Schwenklagers 20B des Ausknickhebels von der Führung bewirken (Fig. 5E). Beim weiteren Anheben des Mitnehmers 18C kommt dieser aus dem Klauenelement 20E wieder frei und die Fassaden- oder Markisenelemente 12A, 12B können unter weiterem Ausknicken in die Öffnungsstellung weiter bewegt werden.

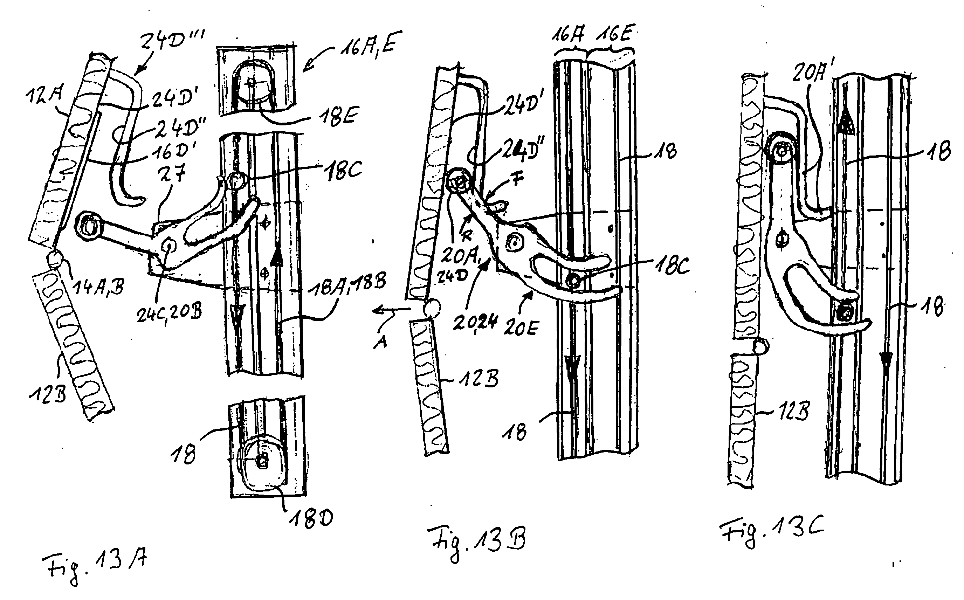

Bei dem Ausführungsbeispiel nach Fig. 6A bis 6C ist ein vergleichbar zu Fig. 5 wirkendes Klauenelement 20E vorgesehen, wobei im Unterschied zu Figur 5 der Ausknickhebel mit einem Gegengewicht ausbalanciert ist (vgl. Fig. 4) und einen Anschlag 20C aufweist, der bei Anliegen an dem Verriegelungshebel 24 ein Weiterverschwenken des Ausknickhebels 20 bezüglich des Verriegelungshebels verhindert. Dieses Ausführungsbeispiel zeigt ferner einen Schieber 17B in Gestalt eines mit zwei in Führungsrichtungen beabstandeten Rollen versehenen Wagens, dessen Ausleger 17B' durch den Schlitz 17A der Führung greift und eine Schwenkachse 12B' mit dem zweiten Fassaden- oder Markisenelements 12B nahe dessen freier Elementkante 13B bildet. Auf diese Weise wird eine ruck- und rüttelfreie Öffnungs- und Schließbewegung auch bei größeren horizontalen Abständen zwischen der Führung und dem zweiten Fassaden- oder Markisenelement sicher gestellt. Ein keilförmig sich nach oben erweiterndes Langloch 17C realisiert bei der Öffnungs- und Schließbewegung eine Leerlaufzone, so dass die Ver- und Entriegelung ohne Querbewegung des Knickgelenks erfolgen kann. Die Keilform des Langloches vermindert das Vibrationsrisiko bei völlig verriegeltem Knickgelenk. Diesem Ausführungsbeispiel ist ferner entnehmbar, dass das Tragprofil 16E der Führungen 16A, 16B sich auch seitlich außerhalb der Fassaden- oder Markisenelemente 12A, 12B erstrecken kann, dieser also seitlich optisch einfasst und mit ihrer Außenfläche eine gemeinsame Front bilden kann. Hierdurch können statischen sowie ästhetischen Aspekten einer erfindungsgemäßen gestalteten Fassade Rechnung getragen werden. Die Fig.6 zeigt ferner (wie auch Fig. 13), dass das Antriebsglied 18 vorteilhaft auch an mindestens einer der Führungen 16A, 16B, umlenkbar sein kann (Umlenkrollen 18D, 18E), insbesondere umlaufend endlos, um den/die Mitnehmer 18C sehr präzise und doch einfach in beide Richtungen verfahren zu können.

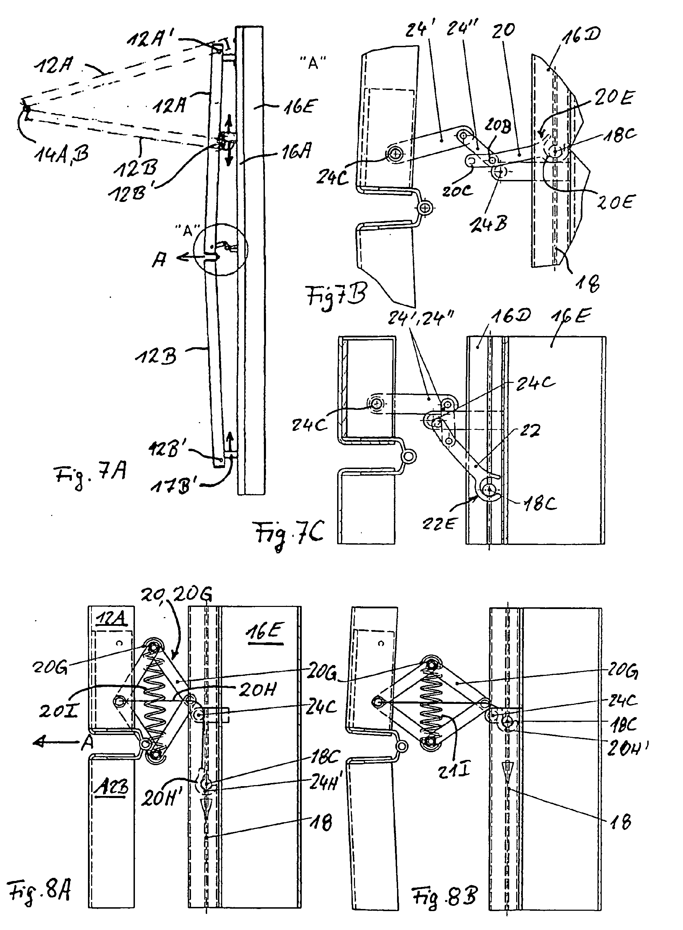

Auch das Ausführungsbeispiel nach Fig. 7A-7C weist ein Klauenelement (20E) am freien Ende des Ausknickhebels 20 auf. Im Unterschied zu dem vorangehenden Ausführungsbeispiel ist der Verriegelungshebel 24 zweigliedrig ausgeführt und besteht aus den verketteten Hebelgliedern 24', 24", die schwenkbar miteinander verbunden sind. Bei dieser Ausführungsform können relativ große Ausknickwege (auch als "Anknickwege" bezeichnend) realisiert werden, wie sich aus der Seitenansicht nach Fig. 7B ersehen lässt. Gleichzeitig kann das hinzu gekommene Hebelglied 24" bereits in einem früheren Schließstadium an dem Verriegelungsanschlag 24B anlegen und das Heranziehen des Knickgelenkes 14A, 14B an die Führung, d.h. das Einnehmen der Strecklage aktiv unterstützen. Durch die dabei einhergehende Relatiwerschwenkung der beiden Hebelglieder 24', 24" bilden diese beiden am Ende der Schließbewegung ein etwa hakenförmiges Element, welches den Verriegelungsanschlag 24B sich hintergreift (Fig. 7C).

Das Ausführungsbeispiel nach Fig. 8A/B zeigt einen Ausknickhebel in Gestalt einer Scherenanordnung, bei der eine Federanordnung 201 in Gestalt einer Zugfeder eine Strecklage der Scherenanordnung (Fig. 8B) herbeiführt, wenn keine Gegenkräfte wir ken. Eine Gegenkraft wird von einer quer zur Federanordnung wirkenden Spannanordnung 20H bewirkt, die in dem dargestellten Ausführungsbeispiel aus einem flexiblen Zugelement, wie einem Seil, mit einem endseitigen Haken 20H' bestehen kann und so angeordnet ist, dass sich das Zugseil um einen ortsfesten Verriegelungsanschlag 24B herumlegen kann. Ausgehend von der Öffnungsstellung (Fig. 20B) ist ersichtlich, dass der Mitnehmer 18C des Antriebsgliedes 18 den Haken 20H' erfassen kann und ihn mitnimmt, so dass die Scherenanordnung 20G entgegen der Zugspannung der Federanordnung 201 komprimiert und dadurch die Fassaden- oder Markisenelemente 12A, 12B an die Strecklage herangezogen werden, wobei sich die Scherenanordnung wie ersichtlich z.B. an dem Verriegelungsanschlag 24B abstützen kann (Fig. 8A). Dadurch ist gleichzeitig eine Verriegelung in der Strecklage sichergestellt und werden Vibrationen aufgrund der elastischen Vorspannung der Feder in sehr kleinen Grenzen gehalten. Dennoch können Stoßbelastungen zum Schutz der Anordnung aufgefangen werden. Zum Öffnen hebt sich der Mitnehmer 18C und das Ausknicken kann, unterstützt durch die Scherenanordnung 20G, ohne jede Verzögerung beginnen.

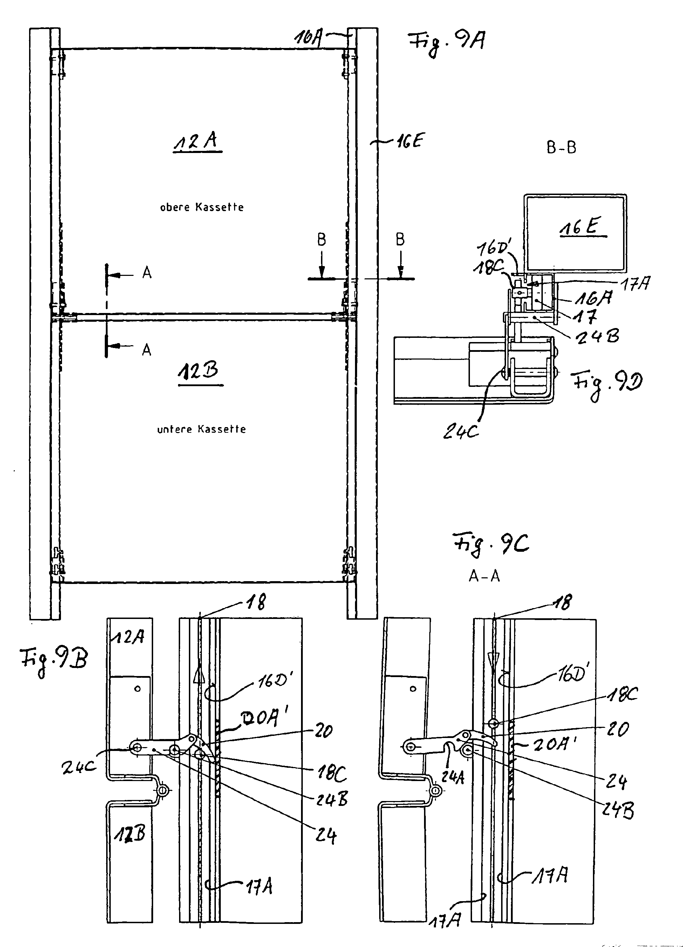

Bei dem Ausführungsbeispiel nach Fig. 9A bis 9D besteht der Unterschied zu dem Ausführungsbeispiel nach Fig. 4 zum einen darin, dass der Ausknickhebel nicht ausbalanciert ist und dass der Führungsschlitz 17A der Führungen 16A und 16B zur Seite hinweist und daher die Frontansicht bei geöffneter Fassade weniger stört. Der Mitnehmer 18C muss dann (wie dargestellt) aus der Führungskammer heraus oder - je nach Bauart der Ausknickhebel von seitlich in sie hineingeführt werden oder es muss ein Fenster im Frontbereich der Führung ein Eingreifen des Ausknickhebels in die Führungskammer in der entsprechenden Zone gestatten. Die in Fig. 9 seitlich der Führung angeordnete Gleit- oder Abrollfläche 16D' ist (wie auch bei Fig. 10) mit einem Dämpfer 20A' versehen oder als solcher, zumindest in dem benötigten Längenbereich, als solcher ausgestaltet, um Geräusche zu dämpfen und/oder Stöße abzumildern.

Bei dem Ausführungsbeispiel nach Fig. 10 ist ein Lenkerhebel 25 einen Ends mit dem ersten Fassaden- oder Markisenelement 12A mit Abstand von dem Schwenklager 24C des Verriegelungshebels 24 schwenkbar befestigt. Mit seinem zweiten Ende ist der Lenkerhebel schwenkbar an dem Ausknickhebel 20 befestigt, wodurch eine Vierpunktlenkanordnung entsteht und somit eine Steuerung der Bewegung des Ausknickhebels 20 in Abhängigkeit von der Schwenkbewegung des Verriegelungshebels 24 erfolgt. Der Verriegelungsanschlag 24B kann bei diesem Ausführungsbeispiel auch in einem Bereich der Führung 16A/B oder zugehörigen Tragprofils 16E verlegt werden. Um die Vorbeifahrt des Mitnehmers 18C am Verriegelungshebel 24 bei seinem Weg nach unten zu ermöglichen, ist ein Kipphebel. 26 vorgesehen, der das Passieren des Mitnehmers nach unten gestattet und bei der Aufwärtsbewegung des Mitnehmers die Mitnahme des Verriegelungshebels 24 ermöglicht. Hierzu ist der Kipphebel 26 ausbalanciert oder unter elastischer Vorspannung gehalten.

Das Ausführungsbeispiel nach Fig. 11 zeigt eine Betätigungsanordnung, bei der der Mitnehmer als Klauenorgan ausgebildet ist mit einer Öffnungsklaue 24B' und einer Schließklaue 24D", die schräg geneigt zu der Führung 16A, 16B und ausreichend weit aus dem Schlitz 17A herausragend einen Eingriffschlitz für einen ggf. justierbaren Doppelanschlag 24D bilden, der an dem Fassaden- oder Markisenelement 12A oder 12B nahe dem Knickgelenk angeordnet ist und automatisch in die Mündungsöffnung des Klauenorgans beim Schließen einfährt und sodann von der Schließklaue 24D" beim weiteren Verfahren des Mitnehmers 18C an die Führung herangezogen wird. Beim wieder Öffnen, wenn der Mitnehmer 18C hochgefahren wird, kommt die Öffnungsklaue 24D' zum Einsatz und schiebt den Doppelanschlag 24D quer zur Führung nach außen und unterstützt damit das Anknicken und weitere Ausknicken der Faltanordnung. Eine derartige Anordnung kann auch ein (nicht dargestelltes) Klauenorgan mit nur einer Öffriungsklaue oder mit nur einer Schließklaue aufweisen, falls die jeweils andere Funktion nicht benötigt wird. Um den Heranziehweg und/oder den Ausknickweg noch zu erhöhen, kann anstatt des Klauenorgans auch eine Scherenanordnung (nicht dargestellt)vergleichbar zu der nach Fig. 8A/B Verwendung finden, indem sie als Mitnehmer 18C mit dem Antriebsglied 18 gekoppelt ist oder wird. Der Mitnehmer 18C kann in diesen Ausführungsformen (wie dargestellt) als Schieber oder Wagen, ggf. rollengeführt, ausgeführt sein, so dass die Schließ- und Öffnungskräfte auf die Führung sicher übertragen werden können. Hiervon völlig getrennt ist die Anordnung der Führungsrollen nahe der zweiten Elementkante 13B. Ja nach Antriebsmechanismus für das Antriebsglied 18 kann es von Vorteil sein, den als Schieber oder Rollenapparat gestalteten Mitnehmer 18C vom Antriebsglied 18 abzukoppeln (nicht dargestellt), wenn er z.B. etwa in der Nähe einer oberen Umlenkung, Aufwicklung des Antriebsglieds 18 oder dergleichen gelangt.

Das Ausführungsbeispiel nach Fig. 12 zeigt eine Betätigungsanordnung einer Faltfassaden- oder Faltmarkisenanordnung in seitlicher Schnittdarstellung entsprechend Fig. 3 mit einem einarmigen Hebel 24, 20 mit Doppelfunktion (Verriegeln und Ausknicken) und einer als - schräg zur Führung 16A orientierten - Aufgleitebene ausgebildeten Gleit- oder Abrollfläche 16D' an der sich freie Ende 20A des kombinierten Verriegelungs-/Ausknickhebels in Ausknickrichtung A verlagernd abstützt, wenn ihn der Mitnehmer 18C weiter anhebt, als in der Figur 12 gezeigt.

Fig. 13A bis 13C zeigen eine Betätigungsvorrichtung einer Faltfassaden- oder Faltmarkisenanordnung mit einem zweiarmigen Hebel mit Doppelfunktion (Verriegeln und Ausknicken) als Bewegungssequenz. Anders als in den vorangegangenen Beispielen, trägt ein gebäudefest angeordneter Schwenklagerhalter 27 das Schwenklager 24C, 20B des Ausknick- und Verriegelungshebels 20, 24, der einen Ends als Klauenelement 20E in der oben schon beschriebenen Weise mit einem seitlich aus dem Schlitz 17A der Führung 16A herausstehenden Mitnehmer 18C zusammenwirkt. Der auf der anderen Seite des Schwenklagers 24C, 20B gelegene Teil des zweiarmigen Hebels dient an seinem freien Ende 20A sowohl dem Heranziehen (vgl. Fig. 13A/B) der Fassaden- oder Markisenelemente 12A, 12B, als auch dem Ausknicken (vgl. Fig. 13B/C) aus der Strecklage wie durch Pfeile R und F in Fig. 13B angedeutet. Dies geschieht im Zusammenwirken mit einer an einem der Fassaden- oder Markisenelemente 12A, 12B vorgesehenen Klauenorgan 24D" mit einer von der Rückseite des einen Fassaden- oder Markisenelemente gebildeten Öffnungsklaue 24D' und andererseits mit Hilfe einer von der Rückseite des einen Fassaden- oder Markisenelementes abstehenden Lasche oder einem gleichwirkenden Element das als Schließklaue 24D" wirkt und den Eingriff des freien, als Rolle ausgestalteten Endes 20A in das Klaueninnere gestattet. Das freie Laschenende kann federnd ausgebildet sein und damit ein sanftes Heranziehen (Fig. 13B) sowie ein Dämpfen am Ende des Schließweges durch federnde gebäudefeste Anlage bewirken. Auch dieses Ausführungsbeispiel zeigt ein endlos umlaufendes Antriebsglied 18, 18A, 18B, das, abweichend von dem Ausführungsbeispiel nach Fig. 6, mit seitlich orientierten Schlitzen 17A und als kastenförmig geschlossenes und voll integriertes Trag- und Führungselement vorteilhaft ausgeführt ist.

Fig. 14A bis 14J zeigen eine weitere Ausführungsform der Erfindung, gemäß der - im Gegensatz zu den vorangehenden Ausführungsbeispielen - am freien . Ende des Ausknickhebels 20 ein Mitnehmerelement 20', wie ein Bolzen, quer absteht und der Mitnehmer 18C etwa klauenartig mit oberen und unteren Anschlägen 18C', 18C" ausgeführt ist, von denen der eine oder der andere mit dem Mitnehmerelement 20' zusammenwirkt. Das Antriebsglied 18 ist eine um obere und untere Umlenkelemente (Umlenkrollen 18D, 18E) laufende Kombination eines Zugelementes 18A' in Gestalt eines Seiles aus Draht oder anderem Material und eines Zugelements 18A" in Gestalt eines Zahnriemens, der am oberen Umlenkpunkt um eine motorisch angetriebene, als Zahnriemenscheibe ausgestaltete Umlenkrolle 18E beidseitig antreibbar umläuft. Die Seilkomponente wird um die untere Umlenkrolle 18D geführt und weist nahe ihres Kopplung-, elementes 18F mit dem Zahnriemen obere und untere höheneinstellbare Anschläge 19A, 19B auf. Zwischen diesen ist die Seilkomponente durch einen länglichen Kanal 21A eines rollbaren Schlittens 21, der obere und untere Gegenanschläge aufweist, mit ausreichendem Radialspiel führt. Hierdurch entsteht eine Leerweganordnung für das Entriegeln und Ausknicken und umgekehrt - wie nachfolgend noch erläutert. Der Schlitten 21 ist mittels seiner Führungsrollen 17 in der Führung 16A bzw. 16B rollend höhenverfahrbar und bezüglich des unteren Fassaden- oder Markisenelementes 12B nahe dessen unterer Elementkante 13B schwenkbar gelagert.

Der Ausknickhebel 20 ist drehfest mit einer Welle 20K verbunden, die seitlich versetzt zu dem Ausknickhebel einen z.B. sichelförmigen Verriegelungshebel 24 drehfest trägt, so dass beide Hebel nur gemeinsam mittels der Welle 20K schwenkbar sind und in etwa in die gleiche Richtung weisen. Eine nicht erkennbare Feder drängt diese Hebelanordnung gegen einen Anschlag derart, dass der Ausknickhebel 20 in der Anschlagsstellung etwa rechtwinklig von dem Fassaden- oder Markisenelement (12A) dem er schwenkbar zugeordnet ist, absteht (siehe Fig. 14D und 14F und 14G). Ein Verriegelungsanschlag 24B ist an der Führung 16A bzw. 16B höheneinstellbar befestigt und von dem Verriegelungshebel 24 hintergreifbar. Alternativ ist allein der Ausknickhebel bezüglich des Zwischen- oder Koppelhebels 23 und des Verriegelungshebels, ggf. gegen der Kraft einer Rückholfeder, schwenkbar; dabei kann der Verriegelungshebel also an dem Zwischen- oder Koppelhebel 23 starr befestigt oder mit ihm einteilig gestaltet sein.

Der Arbeitsablauf ist beim Öffnen nun so, dass in der geschlossenen und verriegelten Stellung (Fig. 14A) der Zahnriemen 18A" über den mit ihm, gegebenenfalls höhenkorrigierbar, verbundenen Mitnehmer 18C das Mitnehmerelement 20' des Ausknickhebels maximal nach unten zieht und die Seilkomponente mit ihrem oberen Anschlag an dem entsprechenden Gegenanschlag des Schlittens 21 in Anlage steht. Beim anfänglichen Hochbewegen des Zahnriemens fährt der Mitnehmer 18C zunächst mit seinem unteren Anschlag von unten gegen das Mitnehmerelement 20' und schiebt dann den noch relativ steil stehenden Ausknickhebel 20 und damit auch den Verriegelungshebel 24 leicht nach oben, so dass der Verriegelungshebel 24 aus der Verriegelungsposition mit dem Verriegelungsanschlag 24B außer Eingriff gelangt (Fig. 14B). Dies geschieht, wie am unteren Bildende ersichtlich, noch in der Leerwegphase des Antriebsgliedes 18.

Um bei möglichst wenig Reibung günstige Verriegelungskräfte zu erzeugen und dem Ausknickhebel 20 frühzeitig eine für das Ausknicken günstigere Schrägstellung (Querkomponente) zu vermitteln, ist die gemeinsame federbelastete Welle 20K der Ausknick-/Verriegelungshebelanordnung an einem Zwischen- oder Koppelhebel 23 befestigt, der mit seinem anderen Ende drehbar an dem einen Fassaden- oder Markisenelement gehalten und gelagert ist. Er ist Verriegelungsstellung vorzugsweise quer zum Fassadenelement erstreckt und liegt über einen Dämpfer 28 stirnseitig an der Führung 16A/B an. In den ausgeknickten Positionen ist der Zwischenhebel zum Beispiel 90 Grad verschwenkt etwa parallel zum Fassadenelement an diesem anliegend angeordnet. Auch andere Schwenkhebel sind möglich und können auch vom Wirkwinkel des Heranzieh- und Verriegelungshebel abhängen.

Beim weiteren Anheben des Mitnehmers 18C gelangt der Ausknickhebel 20 in die in Fig. 14C dargestellte Position, in der auch das untere Leerwegende der Seilkomponente erreicht ist. Bei weiterem Hochfahren der Seilkomponente hebt diese über ihren unteren Mitnehmer 19B den Schlitten 21 an. Dies führt zu einem weiteren Ausknicken und das freie Ende des Ausknickhebels 20 wird nun am Mitnehmer 18C entlastet. Die Feder an der Welle 20K des Ausknickhebels 20 kann diesen nunmehr maximal hochschwenken, so dass sich das Anschlagelement 20' noch leicht anhebt und sich dann vom Mitnehmer 18C seitlich lösen kann (Fig. 14D). Beim weiteren Anheben des Antriebsgliedes 18 fährt die Anordnung in die in Fig. 14E dargestellte maximale Öffnungsposition.

Beim Schließen aus dieser Öffnungsstellung senkt sich die Falltfassadenanordnung durch Schwerkraft wenn der Mitnehmer 18C abgesenkt wird. Der etwa rechtwinklig abstehende Ausknickhebel 20 gelangt mit seinem Mitnehmerelement 20' dadurch bei Erreichen des Mitnehmers 18C in eine Position zwischen dem oberen und unteren Anschlag 18C', 18C" (Fig. 14G). Beim weiterem Senken des Mitnehmers 18 C ( Fig. 14H) wird die Leerweganordnung wieder aktiv und schwenkt den Mitnehmer der Ausknick-/Verriegelungshebelanordnung nach unten. Dabei gelangt der Verriegelungshebel hinter den ortsfesten Verriegelungsanschlag 24B und unterstützt das Heranziehen des Fassadenelementes an die Führung trotz noch relativ großem Anknickwinkeis bis in die in Fig. 14I gezeigte unverriegelte Strecklage der Fassadenanordnung. In dieser ist der Leerweg des Antriebgliedes 18 noch nicht völlig verbraucht. Ein weiteres Herunterfahren des Mitnehmers 18C zwingt den Verriegelungshebel 24 in seine sichere Verriegelungsposition (Fig. 14J). Es hat sich herausgestellt, dass die Öffnung nach dem Verriegeln ggf. auch ohne den beweglichen Zwischen- oder Koppelhebel (23) möglich ist, wenn der Ausknickhebel, der Dampfer (28) und/oder der Verriegelungsbolzen elastisch ausgeführt sind/ist. U.u. reicht schon eine Gummibuchse auf dem Verriegelungsbolzen oder eine elastische Buchse auf dem gemeinsamen Wellenbolzen (20K). Auch ein elastischer Verriegelungshebel (24) ist möglich. Ohne elastische Verriegelungsbolzen oder Bolzen ist der Zwischen- oder Koppelhebel (23) beim Öffnen so weit hoch zu schwenken, bis der Verriegelungshebel (24) aus einer Klemmposition geschoben ist. Dies entspricht derzeit etwa einen Schwenkbereich von 30° für den Zwischenhebel.

Die Erfindung ist vorangehend anhand einiger Ausführungsbeispiele näher erläutert worden, durch diese aber in keiner Weise beschränkt und in vielfältigen weiteren Formen ausführbar.

**BEZUGSZEICHENLISTE**

| | | | |
|---|---|---|---|
| 1 | Gebäude | 18B | Druckelement |
| 10 | Faltfassaden- oder Faltmarkisenanordnung | 18C | Mitnehmer |
| | | 18C' | oberer Anschlag |
| 12A | erstes Fassaden- oder Markisenelement | 18C" | unterer Anschlag |
| | | 18D | Umlenkrolle |
| 12A' | Achse | 18E | Umlenkrolle |
| 12B | zweites Fassaden- oder Markisenelement | 18F | Kopplungselement |
| | | 18G | Antriebsmotor |
| 12B' | zweite Achse | 18H | Winkelgetriebe |
| 12C | Kantenschutzelement | 19A | Anschlag |
| 12C' | Steg | 19B | Anschlag |
| 13A | erste Elementkante | 20 | Ausknickmittel |
| 13B | zweite Elementkante | 20' | Mitnehmerelement |
| 14A,B | Knickgelenk | 20A | freies Ende |
| 15A | erste Ausknickkante | 20A' | Dämpfer |
| 15B | zweite Ausknickkante | 20B | Schwenklager |
| 16A | Führung | 20C | Anschlag |
| 16B | Führung | 20D | Kontergewicht |
| 16D | Führungskammer | 20E | Klauenelement |
| 16D' | Gleit- oder Abrollfläche | 20E' | Öffnungsklaue |
| 16E | Tragprofil | 20E" | Schließklaue |
| 17 | Führungsrollen | 20F | Anlagefläche |
| 17A | Schlitz | 20G | Scherenanordnung |
| 17B | Schieber | 20H | Spannorgan |
| 17B' | Ausleger | 20H' | Haken |
| 17C | Langloch | 20I | Federanordnung |
| 18 | Antriebsglied | 20K | Welle |
| 18A | Zugelement | 21 | Schlitten |
| 18A' | Zugelement | 21A | Kanal |
| 18A" | Zugelement | 22 | Leerweg- oder Streckzone |
| 22A | Federanordnung | 24D" | Schließklaue |
| 23 | Zwischen- oder Koppelhebel | 24D"' | Klauenorgan |
| 24 | Verriegelungshebel | 25 | Lenkerhebel |
| 24' | Hebelglied | 26 | Kipphebel |
| 24" | Hebelglied | 27 | Schwenklagerhalter |
| 24A | Verriegelungs- und/oder Heran-ziehmittel | 28 | Dämpfer |
| | | F | Pfeil |
| 24A' | Hebelfläche | R | Pfeil |
| 24B | Verriegelungsanschlag | S₁ | Schwenkrichtung |
| 24C | Schwenklager | S₂ | Schwenkrichtung |
| 24D | Doppelanschlag | H | Hubrichtung |
| 24D' | Öffnungsklaue | A | Ausknickrichtung |

## Patentansprüche

1. Faltfassaden- oder Faltmarkisenanordnung, umfassend zumindest zwei in sich starre, paarweise vorgesehene Fassaden- oder Markisenelemente (12A, 12B),
- von denen ein erstes Fassaden- oder Markisenelement (12A) um eine vertikale oder horizontale Achse (12A') nahe einer ersten Elementkante (13A) schwenkbar an einem Gebäude (1) indirekt oder direkt befestigt oder befestigbar ist, und
- von denen ein zweites Fassaden- oder Markisenelement (12B) um eine quer zu sich selbst vertikal oder horizontal verlagerbare zweite Achse (12B') nahe einer nahe einer zweiten Elementkante (13B) schwenkbar gehalten und entlang von senkrecht zu der zweiten Elementkante (13B) paarweise angeordneten Führungen (16A, 16B) verlagerbar ist
- und die zweite Elementkante (13B) mittels eines Antriebsgliedes (18), wie mindestens eines Zug- und/oder Druckelementes, entlang der Führungen (16A, 16B) zur ersten Elementkante (13A) des ersten Fassaden- und Markisenelementes hin und von dieser fort bewegbar ist
- und bei der ferner eine der ersten Elementkante (13A) parallel gegenüberliegende erste Ausknickkante (15A) des ersten Fassaden- oder Markisenelementes (12A) mit einer der zweiten Elementkante (13B) parallel gegenüberliegenden zweiten Ausknickkante (15B) des zweiten Fassaden- und Markisenelementes (12B) unter Ausbildung eines Ausknickgelenkes (14A, 14B) schwenkbar verbunden ist und losgelöst von den Führungen (16A, 16B) im Sinne eines Ausknickens quer zu der Fassade und, gegebenenfalls unter Anfügen mindestens eines weiteren Paares ausknickbarer Fassaden- oder Markisenelemente, bewegbar ist,
- ferner umfassend mindestens ein schwenkhebelartiges oder längenveränderliches Betätigungselement in Gestalt eines Heranzieh- und/oder Verriegelungsmittels (24A)
- bei der unter Ausbilden einer Wirkanordnung das mindestens eine Betätigungselement
a) zwischen einem der Fassaden- oder Markisenelemente (12A, 12B) und dem von der Faltfassadenanordnung oder Faltmarkisenanordnung verschlossenen oder überdeckten Bereich wirksam, ist,
b) einen Ends bezüglich des Gebäudes oder bezüglich mindestens eines der Fassaden- oder Markisenelemente befestigt ist,
c) an seinem gegenüberliegendem freien Endbereich entlang des gegenüberliegenden Bauteiles der Wirkanordnung unter Verschwenken oder Längenverändem mittels eines angetriebenen Mitnehmers (18C) in eine Wirklage verlagerbar ist und
d) in oder nahe der Strecklage der Fassaden- oder Markisenelemente mit dem Mitnehmer (18C) in und außer Kontakt bringbar ist.

2. Anordnung nach Anspruch 1, **dadurch gekennzeichnet, dass** das Bestätigungselement ein Ausknickmittel (20) umfasst, das ein Ausknicken des mindestens einen Kniegelenks (14A, 14B) in eine Wirklage mittels des angetriebenen Mitnehmers (18C) erzielt.

3. Anordnung nach Anspruch 1 oder 2, **dadurch gekennzeichnet, dass** das Heranzieh- und/oder Verriegelungsmittel sich mit einem Anschlag, wie einem Verriegelungs- oder Heranziehanschlag (24B) des gegenüberliegenden Bauteiles der Wirkanordnung in oder nahe der Strecklage der Fassaden- oder Markisenelemente verbindet und unter Verschwenken mittels des angetriebenen Mitnehmers (18C) in eine entriegelte Stellung zurück verlagerbar ist.

4. Anordnung nach einem der Ansprüche 2 oder 3, **dadurch gekennzeichnet, dass** das Mittel zum Heranziehen und/oder zum Verriegeln der Faltfassaden- oder Faltmarkisenanordnung in eine/r Strecklage der Fassaden- oder Markisenelemente (12A, 12B) ein drehfest mit dem Ausknickmittel (20) verbundenes Verriegelungs- und/oder Heranziehmittel (24) ist.

5. Anordnung nach einem der Ansprüche 1 bis 4, **dadurch gekennzeichnet, dass** das Antriebsglied (18) mit mindestens einem an dem Ausknickmittel (20) und/oder Heranzieh- und/oder Verriegelungsmittel angreifenden Mitnehmer (18C) versehen ist.

6. Anordnung nach einem der Ansprüche 1 bis 5, **dadurch gekennzeichnet, dass** das mindestens eine Antriebsglied (18) direkt oder indirekt derart mit einer Streck- oder Leerwegzone (22) versehen ist, dass das Antriebsglied (18) bei Bewegungsbeginn im Öffnungssinne zunächst das Verriegelungsmittel (24A) oder das Ausknickmittel (20) im Sinne eines Entriegelns oder Ausknickens betätigt, ohne dass bereits Zugkräfte oder nennenswerte Zugkräfte auf die zu bewegende zweite Elementkante (13B) des diese Kante (13) aufweisenden zweiten Fassaden- oder Markisenelementes (12B) ausgeübt werden.

7. Anordnung nach Anspruch 6, **dadurch gekennzeichnet, dass** die Leerwegzone (22) ein Zugelementabschnitt mit beidendigen Anschlägen (19A, 19B) ist und, vorzugsweise, eine Führung mit Gegenanschlägen zum Führen des Zugelementabschnittes vorgesehen ist.

8. Anordnung nach einem der Ansprüche 1 bis 7, **dadurch gekennzeichnet, dass** der Mitnehmer (18C) klauenförmig getrennte Anschläge (18C', 18C") für eine Aufwärts- und eine Abwärtsbewegung aufweist.

9. Anordnung nach einem der Ansprüche 1 bis 8, **dadurch gekennzeichnet, dass** das Ausknickmittel (20) ein für zwei Wirkrichtungen vorgesehenes Klauenelement (20E) zum lösbaren teilweisen Umgreifen eines Mitnehmers (18C) eines Zug- oder Druckelementes (18) aufweist.

10. Anordnung nach einem der Ansprüche 1 bis 9, **dadurch gekennzeichnet, dass** das Antriebsglied (18) an mindestens einer der Führungen (16A, 16B) umlenkbar verfahrbar ist.

11. Anordnung nach Anspruch10, **dadurch gekennzeichnet, dass** Antriebsglied (18) umlaufend über obere und untere Umlenkmittel geführt ist.

12. Anordnung nach einem der Ansprüche 1 bis 11, **dadurch gekennzeichnet, dass** als Betätigungselement ein zweiarmiger Hebel mit Doppelfunktion Verriegeln und Ausknicken dient, der gebäudefest schwenkgelagert ist und einen Ends als Klauenelement (20E) mit dem Mitnehmer (18C) des Antriebsgliedes (18) zusammenwirkt und anderen Ends an seinem freien Ende (20A) sowohl dem Heranziehen und/oder Verriegeln der Fassaden- oder Markisenelemente (12A, 12B) als auch dem Ausknicken dient.

## Claims

1. A folding-façade or folding-awning arrangement, comprising at least two façade or awning elements (12A, 12B), which are inherently rigid and provided in pairs,
- a first façade or awning element (12A) of which is or can be fastened indirectly or directly on a building (1) such that it can be pivoted about a vertical or horizontal axis (12A') close to a first element edge (13A), and
- a second façade or awning element (12B) of which is held such that it can be pivoted about a second axis (12B') close to a second element edge (13B), which second axis can itself be displaced vertically or horizontally, and can be displaced along guides (16A, 16B) which are arranged in pairs perpendicularly to the second element edge (13B),
- and the second element edge (13B) can be moved by means of a drive element (18), such as at least one pulling and/or pressure element, along the guides (16A, 16B) towards the first element edge (13A) of the first façade and awning element and away from the same,
- and in which a first collapsing edge (15A) of the first façade or awning element (12A), which is parallel to and opposite the first element edge (13A), is furthermore pivotably connected to a second collapsing edge (15B) of the second façade and awning element (12B), which is parallel to and opposite the second element edge (13B), with the formation of a collapsing joint (14A, 14B), and can be detached from the guides (16A, 16B) in the sense of collapsing transversely to the façade and can be moved, with the addition if appropriate of at least one further pair of façade or awning elements that can be collapsed,
- further comprising at least one pivot-lever-like or length-adjustable actuating element in the form of a pull-on and/or locking means (24A)
- in which, with the formation of an operative arrangement, the at least one actuating element
a) is effective between one of the façade or awning elements (12A, 12B) and the region closed or covered by the folding-fagade arrangement or folding-awning arrangement,
b) is fastened at one end with respect to the building or with respect to at least one of the façade or awning elements,
c) can be displaced at the opposite free end region thereof along the opposite component of the operative arrangement into an operative position, with pivoting or a change in length by means of a driven driver (18C), and
d) can be brought into and out of contact with the driver (18C) in or close to the extended position of the façade or awning elements.

2. The arrangement according to claim 1, **characterised in that** the confirmation element comprises a collapsing means (20), which achieves a collapsing of the at least one knee joint (14A, 14B) into an operative position by means of the driven driver (18C).

3. The arrangement according to claim 1 or 2, **characterised in that** the pull-on and/or locking means is connected to a stop, such as a locking or pull-on stop (24B) of the opposite component of the operative arrangement in or close to the extended position of the façade or awning elements and can be displaced back into an unlocked position by pivoting by means of the driven driver (18C).

4. The arrangement according to one of claims 2 or 3, **characterised in that** the means for pulling on and/or for locking the folding-fagade or folding-awning arrangement in(to) an extended position of the façade or awning elements (12A, 12B) is a locking and/or pull-on means (24) that is connected to the collapsing means (20) in a rotationally-fixed manner.

5. The arrangement according to one of claims 1 to 4, **characterised in that** the drive element (18) is provided with at least one driver (18C) acting on the collapsing means (20) and/or pull-on and/or locking means.

6. The arrangement according to one of claims 1 to 5, **characterised in that** the at least one drive element (18) is directly or indirectly provided with an extension or leeway zone (22) such that, when starting to move in the opening direction the drive element (18) first actuates the locking means (24A) or the collapsing means (20) in the sense of unlocking or collapsing, without pulling forces or considerable pulling forces already being exerted on the second element edge (13B) to be moved of the second façade or awning element (12B) having this edge (13).

7. The arrangement according to claim 6, **characterised in that** the leeway zone (22) is a pulling-element section with stops (19A, 19B) at both ends, and a guide with counterpart stops is preferably provided for guiding the pulling-element section.

8. The arrangement according to one of claims 1 to 7, **characterised in that** the driver (18C) has stops (18C', 18C") that are separated in a claw-like manner for an upwards and a downwards movement.

9. The arrangement according to one of claims 1 to 8, **characterised in that** the collapsing means (20) has a claw element (20E), provided for two operative directions, for the releasable partial encompassing of a driver (18C) of a pulling or pressure element (18).

10. The arrangement according to one of claims 1 to 9, **characterised in that** the drive element (18) can be displaced in a divertible manner on at least one of the guides (16A, 16B).

11. The arrangement according to claim 10, **characterised in that** the drive element (18) is guided circumferentially over upper and lower deflection means.

12. The arrangement according to one of claims 1 to 11, **characterised in that** a two-armed lever with double function, locking and collapsing, is used as actuating element, which is pivotably mounted in a manner fixed to the building and interacts at one end as a claw element (20E) with the driver (18C) of the drive element (18) and is used at the other end, at its free end (20A) both for pulling on and/or locking the façade or awning elements (12A, 12B) and for collapsing.

## Revendications

1. Agencement de façade repliable ou agencement de store repliable, comportant au moins deux éléments (12A, 12B) de façade ou de store rigides, prévus par paires,
- dont un premier élément (12A) de façade ou de store est fixé ou susceptible d'être fixé indirectement ou directement sur un bâtiment (1) en étant pivotant autour d'un axe (12A') vertical ou horizontal, à proximité d'une première arête (13A) d'élément et
- dont un deuxième élément (12B) de façade ou de store est maintenu en pouvant pivoter autour d'un deuxième axe (12B') déplaçable à la transversale de lui-même à la verticale ou à l'horizontale, à proximité d'une deuxième arête (13B) d'élément et déplaçable le long de guidages (16A, 16B) placés par paires, à la perpendiculaire de la deuxième arête (13B) d'élément
- et à l'aide d'un organe d'entraînement (18), comme au moins un élément de traction et/ou élément de poussée, la deuxième arête (13B) d'élément est mobile le long des guidages (16A, 16B) vers la première arête (13A) d'élément du premier élément de façade ou de store, vers ou en s'éloignant de celui-ci
- et sur lequel, par ailleurs une première arête d'inflexion (15A) du premier élément (12A) de façade ou de store, parallèlement opposée à la première arête (13A) d'élément est assemblée de manière pivotante avec une deuxième arête d'inflexion (15B) du deuxième élément (12B) de façade ou de store, parallèlement opposée à la deuxième arête (13B) d'élément en formant une articulation d'inflexion (14A, 14B) et est déplaçable en étant détachée des guidages (16A, 16B) dans le sens d'une inflexion à la transversale de la façade et le cas échéant sous raccordement d'une paire supplémentaire d'éléments de façade ou de store susceptibles d'être infléchis,
- comprenant par ailleurs au moins un élément de manoeuvre de type levier pivotant ou à longueur variable, configuré en tant que moyen de rapprochement et/ou de verrouillage (24A),
- sur lequel en formant un agencement actif, l'au moins un élément de manoeuvre
a) est actif entre l'un des éléments (12A, 12B) de façade ou de store et la région fermée ou recouverte par l'agencement de façade repliable ou agencement de store repliable,
b) est fixé sur une extrémité par rapport au bâtiment ou par rapport à au moins l'un des éléments de façade ou de store,
c) sur sa région d'extrémité libre opposée est déplaçable le long de l'élément constitutif opposé de l'agencement actif en pivotant ou en changeant de longueur à l'aide d'un entraîneur (18C) entrainé dans une position active et
d) dans ou presque dans la position étirée des éléments de façade ou de store, peut être amené en contact ou hors contact avec l'entraîneur (18C).

2. Agencement selon la revendication 1, **caractérisé en ce que** l'élément de manoeuvre comprend un moyen d'inflexion (20) qui vise une inflexion de l'au moins une articulation d'inflexion (14A, 14B) dans une position active à l'aide de l'entraîneur (18C) entraîné.

3. Agencement selon la revendication 1 ou 2, **caractérisé en ce que** le moyen de rapprochement et/ou de verrouillage s'assemble avec une butée, comme une butée (24B) de verrouillage ou de rapprochement de l'élément constitutif opposé de l'agencement actif dans ou presque dans la position étirée de l'élément de façade ou de store et en pivotant à l'aide de l'entraîneur (18C) entraîné peut être ramené dans une position déverrouillée.

4. Agencement selon l'une quelconque des revendications 2 ou 3, **caractérisé en ce que** les moyens de rapprochement et/ou de verrouillage de l'agencement de façade repliable ou de store repliable dans une position étirée de l'élément (12A, 12B) de façade ou de store est un moyen de verrouillage et/ou de rapprochement (24) assemblé de manière solidaire en rotation avec le moyen d'inflexion (20).

5. Agencement selon l'une quelconque des revendications 1 à 4, **caractérisé en ce que** l'organe d'entraînement (18) est muni d'au moins un entraîneur (18C) s'engageant sur le moyen d'inflexion (20) et/ou moyen de rapprochement et/ou de verrouillage.

6. Agencement selon l'une quelconque des revendications 1 à 5, **caractérisé en ce qu'**au moins un organe d'entraînement (18) est muni directement ou indirectement d'une zone (22) d'étirage ou de course à vide, de sorte que lors du début du mouvement dans le sens d'ouverture, l'organe d'entraînement (18) actionne d'abord le moyen de verrouillage (24A) ou le moyen d'inflexion (20) dans le sens d'un déverrouillage ou d'une inflexion sans que déjà des forces de traction ou des forces de tractions significatives ne soient exercées sur la deuxième arête (13B) d'élément à mouvoir du deuxième élément (12B) de façade ou de store comportant ladite arête (13).

7. Agencement selon la revendication 6, **caractérisé en ce que** la zone (22) de course à vide est un segment d'élément de traction avec des butées (19A, 19B) sur les deux extrémités et **en ce qu'**il est prévu de préférence un guidage avec des contre-butées pour guider le segment d'élément de traction.

8. Agencement selon l'une quelconque des revendications 1 à 7, **caractérisé en ce que** l'entraîneur (18C) comporte des butées séparées (18C', 18C") en forme de griffes pour un mouvement ascendant et descendant.

9. Agencement selon l'une quelconque des revendications 1 à 8, **caractérisé en ce que** le moyen d'inflexion (20) comporte un élément en griffe (20E) prévu pour deux directions d'action, pour l'entourage partiel amovible d'un entraîneur (18C) d'un élément de traction ou de poussée (18).

10. Agencement selon l'une quelconque des revendications 10 à 9, **caractérisé en ce que** l'organe d'entraînement (18) est déplaçable en étant susceptible d'être renvoyé sur l'au moins un des guidages (16A, 16B).

11. Agencement selon la revendication 10, **caractérisé en ce que** l'organe d'entraînement (18) est guidé en révolution sur des moyens de renvoi supérieurs et inférieurs.

12. Agencement selon l'une quelconque des revendications 1 à 11, **caractérisé en ce qu'**un levier à deux bras à double fonction de verrouillage et d'inflexion qui est logé en pivotement de manière fixe sur le bâtiment et qui sur une extrémité, sous la forme d'élément en griffe (20E) coopère avec l'entraîneur (18C) de l'organe d'entraînement (18) et sur l'autre extrémité par son extrémité libre (20A) sert aussi bien à rapprocher et/ôu à verrouiller les éléments (12A, 12B) de façade qu'également à l'inflexion fait office d'élément de manoeuvre.
